# EUROPEAN PATENT APPLICATION

(11) **EP 4 454 942 A1**
(43) Date of publication of application: **30.10.2024**
(21) Application number: 24168412.5
(22) Date of filing: 04.04.2024
(51) Int. Cl.: B60N 2/42

(54) **VEHICLE SEAT ASSEMBLY WITH INTEGRATED LAP BELT PRE-TENSIONING TO OPTIMIZE LAP BELT GEOMETRY**

(30) Priority: 07.04.2023 US 202363457818 P; 26.03.2024 US 202418616424
(71) Applicant: Volvo Car Corporation, 405 31 Göteborg (SE)
(72) Inventor: Adolfsson, Peter, 405 31 Göteborg (SE); Setterberg, Peter, 405 31 Göteborg (SE); Carlsson, Andreas, 405 31 Göteborg (SE); Rosenberg, Johan, 405 31 Göteborg (SE); Bohman, Katarina, 405 31 Göteborg (SE); Bjorklund, Magnus, 405 31 Göteborg (SE); Osth, Jonas, 405 31 Göteborg (SE); Heurlin, Fredrik, 405 31 Göteborg (SE)
(74) Representative: Nederlandsch Octrooibureau

(57) **Abstract**

A seat belt buckle pre-tensioning system that is integrated into a seat assembly including a seat bottom and seat back pivotably coupled together. When an impact event is detected (or anticipated), a seat belt assembly anchorage point is rapidly moved forwards and downwards such that a coupled lap belt is pre-tensioned and moved into a position that optimizes lap belt geometry and prevents submarining during an impact event. This may be done using an explosive pre-tensioner, a mechanical pre-tensioner, and/or an electronic pre-tensioner with an appropriate controller and may be applied to the lap belt anchorage points on one or both sides of the seat. This serves to ensure that the occupant's pelvic bone adequately engages the lap belt of the seat assembly and does not slide under the lap belt during the impact event, thus preventing submarining.

## Description

### TECHNICAL FIELD

The present disclosure relates generally to the automotive field. More particularly, the present disclosure relates to a vehicle seat assembly with integrated lap belt pre-tensioning to optimize lap belt geometry. The present disclosure further relates to associated vehicles and lap belt pre-tensioning methods and implementation of such methods via one or more memory and processors.

### BACKGROUND

A conventional seat belt typically includes a lap belt that, in use, traverses the waist of a vehicle occupant from an anchorage point on one side of a vehicle seat to a buckle latch member and associated buckle receptacle device on the opposite side of the vehicle seat. The lap belt then typically continues through the buckle latch member as a shoulder belt back across the chest and shoulder of the vehicle occupant and engages a routing device and/or retraction/tensioning device coupled to a pillar, such as the B-pillar in the automotive context, of the body of the vehicle, adjacent to the heat rest of the vehicle seat and head of the vehicle occupant, on the same side of the vehicle seat as the anchorage point. Alternatively, the lap belt terminates at the buckle latch member, to which the shoulder belt is also coupled. This retraction/tensioning device can be disposed on or within the pillar, or at an intermediate point or the base of the pillar (with the routing device then disposed adjacent to the heat rest of the vehicle seat and head of the vehicle occupant).

The retraction/tensioning device serves to spool out and take up belt material when the seat belt is fastened or removed. Optionally, the retraction/tensioning device can include a mechanical or explosive pre-tensioning device that snugs the seat belt against the torso of the vehicle occupant, and the torso of the vehicle occupant against the seat back, in the event of a substantial acceleration/deceleration, braking event, and/or impact, such that the seat belt can then apply a restraint force against the torso of the vehicle occupant without causing a seat belt injury. Ultimately, the lap belt applies a restraint force against the waist of the vehicle occupant and the shoulder belt applies a restraint force against the torso of the vehicle occupant when the retraction/tensioning device is limited or locks, holding the vehicle occupant securely against the seat bottom and seat back, respectively, during the braking and/or impact event. Although other configurations are possible, most conventional seat belts operate in a similar manner.

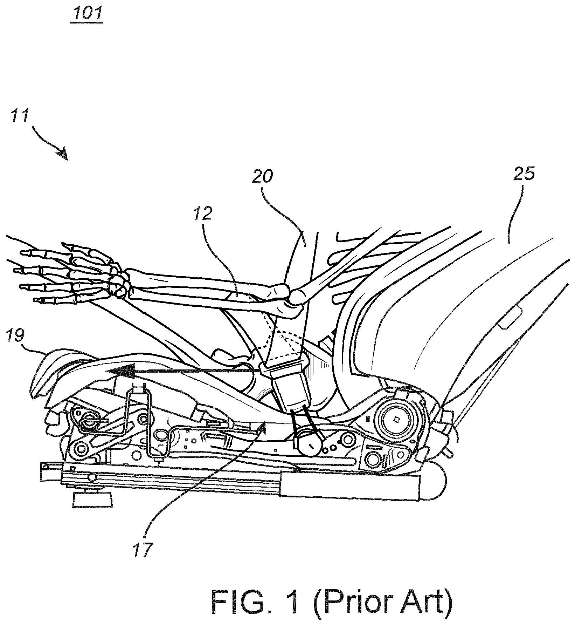

As vehicles become more and more autonomous (and otherwise), highly reclined seat back angles are becoming more and more common. Such highly reclined seat back angles can lead to occupant submarining problems - where the occupant's pelvic bone fails to adequately engage the lap belt of a seat and essentially slides under the lap belt during an impact event. This can lead to poor restraint performance and a risk of abdominal injury due to loading of the abdomen by the lap belt. Such submarining is illustrated in FIG. 1, depicting an occupant's pelvic bone 17 that is essentially free to translate forward under the lap belt 12 of a seat 11 during an impact event. The highly reclined seat back 25, relative to the seat bottom 19, is also illustrated.

As such, a need exists in the art for a vehicle seat assembly and associated occupant restraint system, control system, vehicle, and method for vehicles that overcome the above limitations.

This background is provided as an illustrative contextual environment only. It will be readily apparent to those of ordinary skill in the art that the systems and methods of the present disclosure may be implemented in other contextual environments as well.

### SUMMARY

Therefore, it is an object of the present disclosure to provide vehicle seat assemblies and associated occupant restraint systems, control systems, vehicles, and methods that overcome the limitations of the known art. The present disclosure provides a vehicle seat assembly with integrated lap belt pre-tensioning to optimize lap belt geometry and prevent submarining during an impact event, especially when a highly reclined seat back angle is utilized. The present disclosure also provides associated lap belt pre-tensioning methods.

The vehicle seat assembly of the present disclosure utilizes a seat belt buckle pre-tensioning system that is integrated into the seat structure. When an impact event is detected (or anticipated), the seat belt buckle anchorage point is rapidly moved forwards and downwards such that the coupled lap belt is pre-tensioned and moved into a position that optimizes lap belt geometry and prevents submarining during the impact event. This may be done using an explosive pre-tensioner, a mechanical pre-tensioner, and/or an electronic pre-tensioner with an appropriate controller and may be applied to the lap belt anchorage points on one or both sides of the seat. By way of example, the forwards anchorage point movement is 50 mm or more, while the downwards anchorage point movement is also 50 mm or more. This serves to ensure that the occupant's pelvic bone adequately engages the lap belt of the seat and does not slide under the lap belt during the impact event, thus preventing submarining.

To achieve the foregoing and other objects and advantages, in one aspect, the present subject matter is directed to a vehicle seat assembly including a seat bottom, a seat back pivotably coupled to the seat bottom, and a buckle assembly coupled to the seat bottom at an anchorage point. The anchorage point is adapted to be translated forwards and downwards relative to the seat bottom upon detection of an impact event or impending impact event, thereby pre-tensioning a lap belt coupled to the buckle assembly.

In at least one embodiment, the vehicle seat assembly may further include a pre-tensioner operably coupled between the buckle assembly and the seat bottom. The pre-tensioner may be configured to translate the anchorage point forward and downwards relative to the seat bottom upon detection of the impact even or impending impact event. In an additional or alternative embodiment, the pre-tensioner may include one or more of an explosive pre-tensioner, a mechanical pre-tensioner, or an electronic pre-tensioner. Additionally or alternatively, the pre-tensioner may be configured to provide a variable biasing force to translate the anchorage point such that the degree of pre-tensioning is determined by amount of biasing force provided by the pre-tensioner. In further or alternative embodiments, the anchorage point of the seat bottom may include one or more of a track structure, a slot defined in the seat bottom, or a lever.

Additionally or alternatively, the vehicle seat assembly may further include an anchorage assembly coupled to the seat bottom opposite the buckle assembly at an additional anchorage point. The additional anchorage point may also be adapted to be translated forwards and downwards relative to the seat bottom upon detection of the impact event or impending impact event, thereby further pre-tensioning the lap belt coupled to the anchorage assembly. In some such embodiments or alternative embodiments, the vehicle seat assembly may further include an additional pre-tensioner operably coupled between the anchorage assembly and the seat bottom. The additional pre-tensioner may be configured to translate the additional anchorage point forward and downwards relative to the seat bottom upon detection of the impact even or impending impact event.

In an additional or alternative aspect, the present subject matter is directed to a vehicle including two or more seat assemblies, and one or more of the seat assemblies is configured as a tensioning seat assembly. The tensioning seat assembly includes a seat bottom, a seat back pivotably coupled to the seat bottom, and a buckle assembly coupled to the seat bottom at an anchorage point. The anchorage point is adapted to be translated forwards and downwards relative to the seat bottom upon detection of an impact event or impending impact event, thereby pre-tensioning a lap belt coupled to the buckle assembly.

In at least one embodiment, each seat assembly may be configured as the tensioning seat assembly. In an additional or alternative embodiment, multiple of the seat assemblies may be each configured as the tensioning seat assembly. In some such embodiments or different embodiments, the vehicle may further include a controller communicatively coupled to the tensioning seat assemblies. The controller may be configured to cause the anchorage point of one or more selected tensioning seat assemblies of the tensioning seat assemblies to translate forwards and downwards relative to the seat bottom upon detection of an impact event or impending impact event.

In further or alternative embodiments, the tensioning seat assembly may further include a pre-tensioner operably coupled between the buckle assembly and the seat bottom. The pre-tensioner may be configured to translate the anchorage point forward and downwards relative to the seat bottom upon detection of the impact even or impending impact event. Additionally or alternatively, the tensioning seat assembly may further include an anchorage assembly coupled to the seat bottom opposite the buckle assembly at an additional anchorage point. The additional anchorage point may also be adapted to be translated forwards and downwards relative to the seat bottom upon detection of the impact event or impending impact event, thereby further pre-tensioning the lap belt coupled to the anchorage assembly.

In an additional or alternative aspect, the present subject matter is directed to a non-transitory computer-readable medium including instructions stored in one or more memory that, when executed by processor(s), cause the processor(s) to carry out steps. The steps include determining an impact event or impending impact event of a vehicle including the memory(ies) and the processor(s). The steps further include communicating, in response to the determination of the impact event or impending impact event of the vehicle, a signal to a pre-tensioner of a vehicle seat assembly of the vehicle. The vehicle seat assembly further includes a seat bottom, a seat back pivotably coupled to the seat bottom, and a buckle assembly coupled to the seat bottom at an anchorage point. The steps further include translating, in response to the communication, the anchorage point forwards and downwards relative to the seat bottom utilizing the pre-tensioner such that a lap belt coupled to the buckle assembly is pre-tensioned.

In at least one embodiment, the steps may further include determining a reclination angle of an occupant of the vehicle seated in the vehicle seat assembly. Furthermore or alternatively, the signal may only be communicated to the pre-tensioner when the determined reclination angle is over a threshold angle. In additional or alternative embodiments, the pre-tensioner may be configured to translate the anchorage point forwards and downwards a first amount in response a first signal and a second amount, different than the first amount, in response to a second signal, different from the first signal. In some such embodiments or other embodiments, the signal may include the first signal when the reclination angle of the occupant is over the threshold angle and below an additional threshold angle. Additionally or alternatively, the signal may include the second signal when the reclination angle of the occupant is over the threshold angle and the additional threshold angle.

In an additional or alternative embodiment, the steps may further include communicating, in response to the determination of the impact event or impending impact event of the vehicle, an additional signal to an additional pre-tensioner of the vehicle seat assembly of the vehicle. The vehicle seat assembly may further include an anchorage assembly coupled to the seat bottom opposite the buckle assembly at an additional anchorage point. An additional or alternative step may include translating, in response to the additional signal, the additional anchorage point forwards and downwards relative to the seat bottom utilizing the additional pre-tensioner such that the lap belt coupled to the anchorage assembly is further pre-tensioned.

In additional or alternative embodiments, the steps may include determining a severity of the impact event or impending impact event. For some such embodiments or other embodiments, the signal may only be communicated to the pre-tensioner when the determined severity is over a threshold severity. Additionally or alternatively, the pre-tensioner may be configured to translate the anchorage point forwards and downwards a first amount in response a first signal and a second amount, different than the first amount, in response to a second signal, different from the first signal. In further or alternative embodiments, the signal may include the first signal when the severity of the impact event or impending impact event is over the threshold severity and below an additional threshold severity. Additionally or alternatively, the signal may include the second signal when the severity of the impact event or impending impact event is over the threshold severity and the additional threshold severity.

In additional or alternative embodiments, the steps may further include communicating an incident signal to a remote computing device. The incident signal may be indicative of utilization of the pre-tensioner. Additionally or alternatively, the steps may further include receiving a report signal communicated from a remote computing device indicating at least one of a leading vehicle impact event or utilization of a leading vehicle pre-tensioner of a leading vehicle at a route position shared with the vehicle. In some such embodiments or different embodiments, the impact event or impending impact event may be determined, at least in part, based on the report signal.

In an additional or alternative aspect, the present subject matter is directed to a vehicle seat lap belt pre-tensioning method including, given a seat assembly including a seat bottom, a seat back pivotably coupled to the seat bottom, and a buckle assembly coupled to the seat bottom at an anchorage point, translating the anchorage point forwards and downwards relative to the seat bottom upon detection of an impact event or impending impact event, thereby pre-tensioning a lap belt coupled to the buckle assembly.

In at least one embodiments, the vehicle seat lap belt pre-tensioning method may further include, given an anchorage assembly coupled to the seat bottom opposite the buckle assembly at an additional anchorage point, translating the additional anchorage point forwards and downwards relative to the seat bottom upon detection of the impact event or impending impact event, thereby further pre-tensioning the lap belt coupled to the anchorage assembly.

Embodiments of the invention can include one or more or any combination of the above features and configurations.

Additional features, aspects, and advantages of the invention will be set forth in the detailed description of illustrative embodiments that follows, and in part will be readily apparent to those skilled in the art from that description or recognized by practicing the invention as described herein. It is to be understood that both the foregoing general description and the following detailed description present various embodiments of the invention and are intended to provide an overview or framework for understanding the nature and character of the invention as it is claimed. The accompanying drawings are included to provide a further understanding of the invention and are incorporated in and constitute a part of this specification.

### BRIEF DESCRIPTION OF THE DRAWINGS

A full and enabling disclosure of the present invention, including the best mode thereof, directed to one of ordinary skill in the art, is set forth in the specification, which makes reference to the companying drawings, in which:
FIG. 1 illustrates occupant submarining during a vehicle impact event caused by inadequate lap belt restraint;
FIG. 2 illustrates a perspective view of an exemplary embodiment of a seat assembly of an occupant restraint system of a vehicle, in accordance with aspects of the present subject matter;
FIG. 3 illustrates a perspective view of another exemplary embodiment of a seat assembly of an occupant restraint system of a vehicle, in accordance with aspects of the present subject matter;
FIG. 4 illustrates one embodiment of a physical operation of a vehicle seat assembly with integrated lap belt pre-tensioning to optimize lap belt geometry, in accordance with aspects of the present subject matter;
FIG. 5 illustrates an embodiment of a translatable anchorage point including a track structure, in accordance with aspects of the present subject matter;
FIG. 6 illustrates another embodiment of a translatable anchorage point including a slot, in accordance with aspects of the present subject matter;
FIG. 7 illustrates another embodiment of a translatable anchorage point including a lever, in accordance with aspects of the present subject matter;
FIG. 8 illustrates a schematic diagram of an exemplary embodiment of an occupant restraint system, in accordance with aspects of the present subject matter;
FIG. 9 illustrates an exemplary embodiment of a method for controlling a system for operating one or more pre-tensioners of an occupant restraint system, in accordance with aspects of the present subject matter;
FIG. 10 illustrates a schematic diagram of an exemplary embodiment of a network of a cloud-based system for implementing various cloud-based services, in accordance with aspects of the present subject matter;
FIG. 11 illustrates a schematic diagram of an exemplary embodiment of a server which may be used in the cloud-based system of FIG. 10 or stand-alone, in accordance with aspects of the present subject matter; and
FIG. 12 illustrates a schematic diagram of an exemplary embodiment of a user device which may be used in the cloud-based system of FIG. 10 or stand-alone, in accordance with aspects of the present subject matter.

It will be readily apparent to those of ordinary skill in the art that aspects of illustrated embodiments may be used in any desired combinations, without limitation. Repeat use of reference characters in the present specification and drawings is intended to represent the same or analogous features or elements of the present invention.

### DETAILED DESCRIPTION

The present invention will now be described more fully hereinafter with reference to the accompanying drawings in which exemplary embodiments of the invention are shown. However, the invention may be embodied in many different forms and should not be construed as limited to the representative embodiments set forth herein. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. It is envisioned that other embodiments may perform similar functions and/or achieve similar results. Any and all such equivalent embodiments and examples are within the scope of the present invention and are intended to be covered by the appended claims.

The exemplary embodiments are provided so that this disclosure will be both thorough and complete and will fully convey the scope of the invention and enable one of ordinary skill in the art to make, use, and practice the invention. The word "exemplary" is used herein to mean "serving as an example, instance, or illustration." Any implementation described herein as "exemplary" is not necessarily to be construed as preferred or advantageous over other implementations.

The terms "coupled," "fixed," "attached to," "communicatively coupled to," "operatively coupled to," and the like refer to both direct coupling, fixing, attaching, communicatively coupling, and operatively coupling as well as indirect coupling, fixing, attaching, communicatively coupling, and operatively coupling through one or more intermediate components or features, unless otherwise specified herein. "Communicatively coupled to" and "operatively coupled to" can refer to physically and/or electrically related components.

As used herein, the terms "first", "second", and "third" may be used interchangeably to distinguish one component from another and are not intended to signify location or importance of the individual components. The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Again, the vehicle seat assembly of the present disclosure utilize a seat belt buckle pre-tensioning system that is integrated into the seat structure. When an impact event is detected (or anticipated), the seat belt buckle anchorage point is rapidly moved forwards and downwards such that the coupled lap belt is pre-tensioned and moved into a position that optimizes lap belt geometry and prevents submarining during the impact event. This may be done using an explosive pre-tensioner, a mechanical pre-tensioner, and/or an electronic pre-tensioner with an appropriate controller and may be applied to the lap belt anchorage points on one or both sides of the seat. By way of example, the forwards anchorage point movement is 50 mm or more, while the downwards anchorage point movement is also 50 mm or more. This serves to ensure that the occupant's pelvic bone adequately engages the lap belt of the seat and does not slide under the lap belt during the impact event, thus preventing submarining.

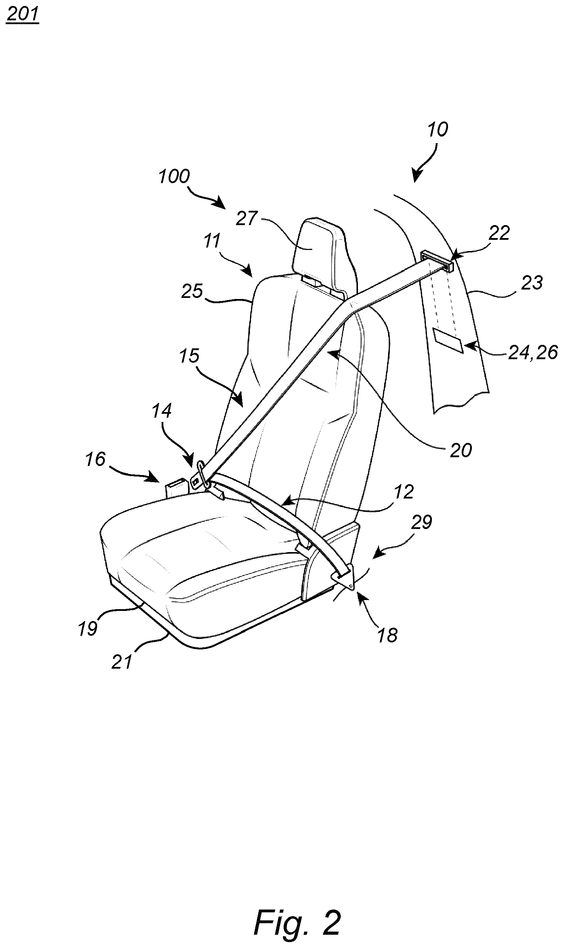

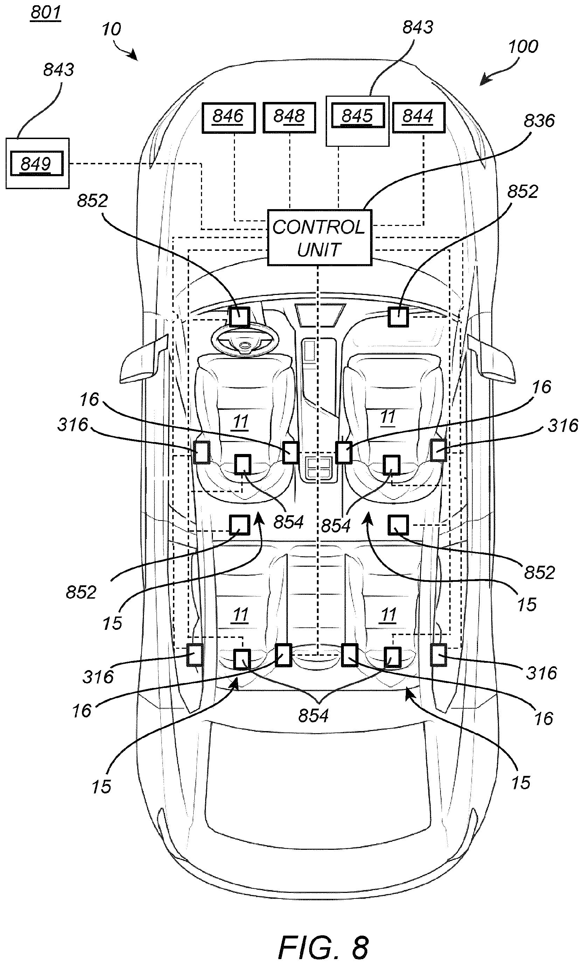

Referring now generally to FIG. 2-3, perspective views of exemplary embodiments of an occupant restraint system of a vehicle are illustrated in accordance with aspects of the present subject matter. As shown, a vehicle 10 (see also FIG. 8) may generally include an occupant restraint system 100 and/or one or more buckle assemblies 16, as described herein. For example, the occupant restraint system 10 may include a buckle assembly 16 for each seat belt assembly 15 and a seat belt assembly 15 for each seat assembly 11 provided in the vehicle 10.

In some embodiments, the vehicle 10 may be an electric vehicle having electrical components (e.g., batteries) for propelling the vehicle 10. Alternatively, the vehicle 10 may be configured with a rear-mounted or front-mounted internal combustion engine. In other embodiments, the vehicle 10 may be configured as a hybrid vehicle, which is driven by both a petroleum product (e.g., gas, diesel, jet fuel, and the like) and electrical power. It will be appreciated that the exemplary vehicle(s) 10 depicted and described herein are by way of example only, and, in other exemplary embodiments, the vehicle 10 may have any other suitable configuration, including, for example, any other suitable number of rows of seats, rows of doors, etc. Additionally or alternatively, in other exemplary embodiments, any other suitable power sources may be provided. For example, the vehicle 10 may include a liquid or gaseous hydrogen powered engine, a gas turbine engine, an inboard motor, an outboard motor, etc.

While embodiments of the vehicle 10 herein may be illustrated or described as an automotive vehicle, it should be appreciated that the present disclosure is equally applicable to any other form of transportation (e.g., trains, rotary-wing aircraft, fixed-wing aircraft, boats, busses, passenger rail cars, public transportation, amusement rides/carts, and the like) where an occupant restraint system and/or a buckle assembly is desired or required for occupant safety.

Regardless of the type of power train, design, or model of the vehicle 10, the vehicle 10 may include occupant the restraint system 100 and/or the buckle assembly(ies) 16, as described herein. Referring still to FIG. 2-3, in some exemplary embodiments, the seat belt assembly(ies) 15, when fastened, is disposed about a vehicle seat assembly 11 and the waist and chest and shoulder of a vehicle occupant seated in the seat assembly 11, as a conventional seat belt assembly is.

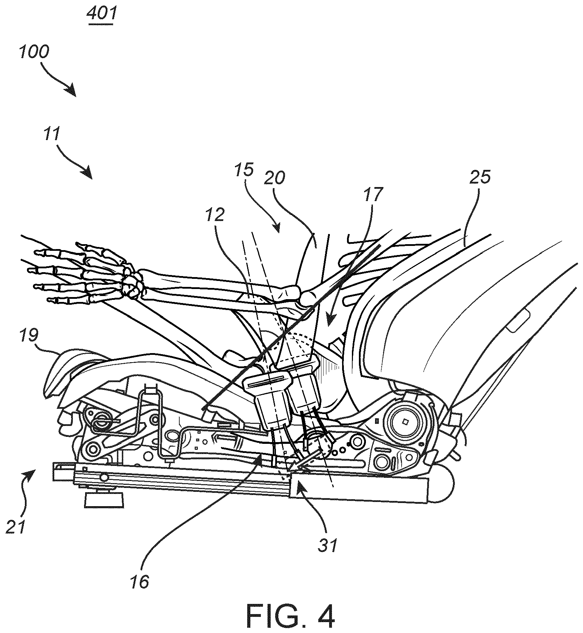

In general, the seat belt assembly 15 may include a seat belt webbing (lap belt 12) that is coupled to a body, frame, or the like (body 29) of the vehicle 10 on one side of the seat assembly 11 at one end and to a buckle member latch (latch 14) that is configured to selectively engage the buckle assembly 16 disposed on an opposite side of the seat assembly 11 at an opposite end. The latch 14 and the buckle assembly 16 form a detachable anchorage point (e.g., a detachable, translatable anchorage point 31 as shown in FIG. 4-7) for the seat belt assembly 15.

Referring now particularly to FIG. 2, at one end, the lap belt 12 may be coupled to a fixed and/or pivoting anchor member 18 disposed along or protruding from the body 29 of the vehicle 10, adjacent to a side of the seat bottom 19 and/or seat base 21. Alternatively, the lap belt 12 can be directly or indirectly coupled to a retraction/tensioning device (described in greater detail below) at this point. Alternatively, the anchor member 18 may be coupled to the seat bottom 19 and/or seat base 21 and opposite the buckle assembly 16.

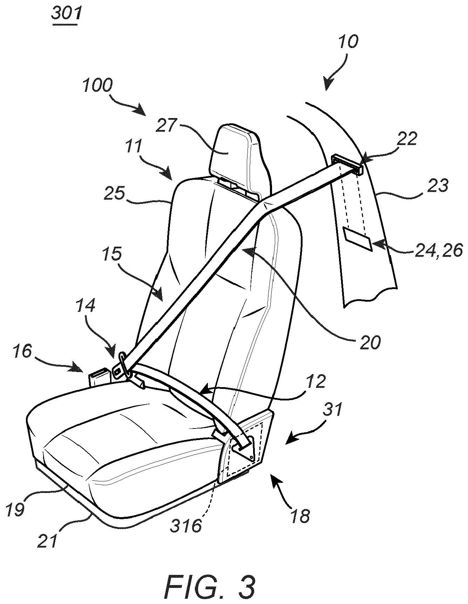

Referring now particularly to FIG. 3, in additional or alternative embodiments, the seat assembly 15 may include an anchorage assembly 316 coupled to the seat bottom 19 and/or seat base 21 and opposite the buckle assembly 16. Generally and as will described in more detail below, the anchorage assembly 316 is configured to allow the pivoting anchor member 18 translate forward and downward relative to the seat assembly 11, seat bottom 19, and/or seat base 21 via a translatable anchorage point 31 (see also FIGS. 4-7).

Referring again generally to FIGS. 2-3, the lap belt 12 at the opposite end from the anchor member 18 is coupled to or passes through a body or slot manufactured into the latch 14, which includes a tab for securely engaging the buckle assembly 16 with the push of a button or the like. The buckle assembly 16 is coupled with the seat bottom 19 and/or seat base 21 opposite the anchor member 18 and/or anchorage assembly 316. Again, the latch 14 and buckle assembly 16 collectively form a detachable anchorage point when engaged with one another. In use, the lap belt 12 is configured to be selectively disposed across the waist of the occupant. As the lap belt 12 passes through the latch 14 and/or is retractable, its length can vary to comfortably accommodate different occupants. The lap belt 12 is made of a webbing material that receives and softens the force of a braking and/or impact event, such as polyester or nylon webbing material woven from warp and weft strands.

The seat belt assembly 15 also typically includes a shoulder belt 20 (e.g., a portion of the seat belt webbing forming the lap belt 12 or a distinct seat belt webbing) that is coupled to the latch 14 at one end and to the body (e.g., a pillar 23, such as the B-pillar for suitably configured vehicles) of the vehicle 10 at an opposite end. The shoulder belt 20 may be configured to be selectively disposed across the chest and shoulder of the occupant when fastened. Again, the shoulder belt 20 may include or be formed from a webbing material that receives and softens the force of a braking and/or impact event, such as polyester or nylon webbing material. Optionally, the lap belt 12 and the shoulder belt 20 are integrally formed, consisting of one unitary belt that passes through the latch 14 between the anchor member 18 and/or anchorage assembly 316 and the pillar 23, making both the lap belt 12 and the shoulder belt 20 adjustable to comfortably accommodate different occupants. In this case, the movement of the latch 14 along the unitary belt is typically limited to a range, and the latch 14 acts as a demarcation point between what is ultimately referred to as the lap belt 12 and the shoulder belt 20.

The opposite end of the shoulder belt 20 may be coupled to the body of the vehicle 10 (e.g., pillar 23) via one or more of a routing device 22 and a retraction/tensioning device (seat belt retractor 24). For example, the shoulder belt 20 can first be received by the routing device 22 at a relatively higher position along the pillar 23, such as adjacent to the top portion of the seat back 25, the head rest 27, and the head of the occupant. The shoulder belt 20 can then be fed to the seat belt retractor 24 at a relatively lower position along or within the pillar 23 or along the body and/or floor of the vehicle 10. Alternatively, the routing device 22 and the seat belt retractor 24 can be integral or collocated at the upper portion of the pillar 23. The seat belt retractor 24 may be operable for spooling out and taking up seat belt webbing of the shoulder belt 20 when the seat belt assembly 15 is fastened and removed and limiting spooling out (i.e., locking) of the seat belt webbing and/or the shoulder belt 20 upon the occurrence of a braking and/or impact event. In various embodiments herein, the seat belt retractor 24 may provide tension on the seat belt webbing and/or shoulder belt 20 sufficient to cause the seat belt webbing to retract within the seat belt retractor 24 when the latch 14 in not secured to the buckle assembly 16 and no other external force counteracts the tension provided by the seat belt retractor 24.

Optionally, the seat belt retractor 24 includes or is associated with a mechanical or explosive pre-tensioning device 26 operable for removing slack from the seat belt webbing and/or shoulder belt 20 upon the occurrence of the braking and/or impact event of the vehicle 10. Such pre-tensioning devices are well known to those of ordinary skill in the art. All such pre-tensioning devices will act on both the lap belt 12 and the shoulder belt 20 if a unitary belt is used, as described herein above. Ultimately, the lap belt 12 applies a restraint force against the waist of the vehicle occupant. The shoulder belt 20 applies a restraint force against the torso of the vehicle occupant when the seat belt assembly 15 is properly positioned relative to the occupant and the seat belt retractor 24 and/or pre-tensioning device 26 is limited or locks, holding the vehicle occupant securely against the seat bottom 19 and seat back 25, respectively. As mentioned above, the seat belt assembly 15 and/or seat assembly 11 may additionally or alternatively include a routing device, seat belt retractor, and/or pre-tensioning device at or in proximity to the location of the anchor member 18 of FIG. 2 rather than the anchor member 18 in order to spool out and take up seat belt webbing of the lap belt 12 when the seat belt assembly 15 is fastened and removed and limiting spooling out (i.e., locking) of the seatbelt webbing and/or the lap belt 12 upon the occurrence of a braking and/or impact event.

While the above seat belt assembly 15 is illustrated and describe in the context of a 3-point seat belt, it should be appreciated that additional or alternative configurations of the seat belt assembly 15 may be configured to include a lap belt only, a shoulder belt only, a belt-in-seat arrangement, a 5-point seatbelt, and/or a 6-point harness. Furthermore, different embodiments of the seat belt assembly may include additional or alternative buckle assembly(ies) 16, latches 14, and/or anchor members 18 suitable for the corresponding type of seat belt assembly 15.

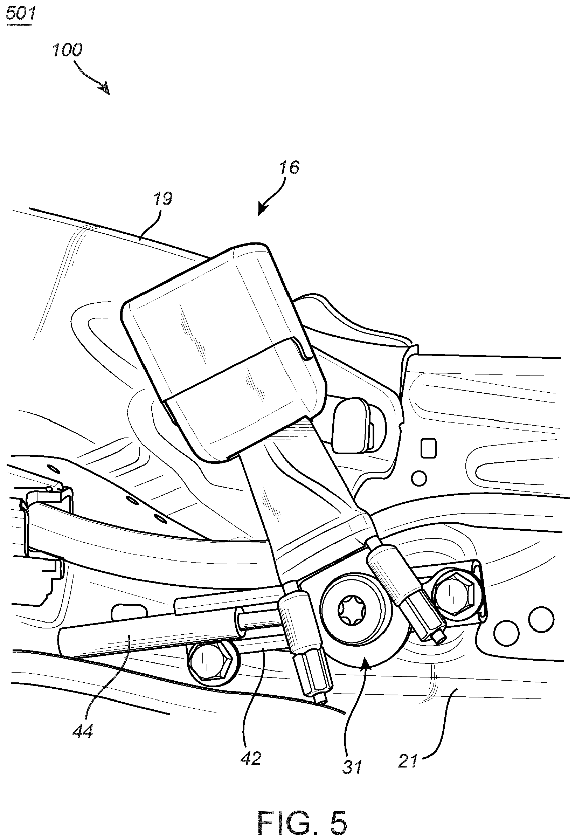

Referring now to FIG. 4-7, schematic views of exemplary embodiments of a seat belt apparatus including a translatable anchorage point are illustrated in accordance with aspects of the present subject matter. One or more translatable anchorage points 31 may be incorporated into the vehicle 10, as described above in reference to FIG. 2-3, or alternatively may be integrated into any other suitable vehicle. For example, the translatable anchorage point(s) 31 may be incorporated into the buckle assembly(ies) 16 and/or the seat belt assembly(ies) 15 of the occupant restraint system 100 or one or more buckle assemblies of seat belt assemblies of a suitably configured occupant restraint system and/or vehicle. Furthermore, while FIGS. 4-7 illustrate translatable anchorage points in conjunction with the buckle assembly(ies) 16 and actuated via a pre-tensioner 44 (see FIG. 5), the following description is equally applicable to additional or alternative translatable anchorage points 31 utilized in conjunction with the anchorage assembly(ies) 316 and/or anchor member(s) 18 of the occupant restraint system 100 or one or more anchorage assemblies and/or anchor members of seat belt assemblies of a suitably configured occupant restraint system and/or vehicle. For example, FIG. 3 schematically illustrates the incorporation of the translatable anchorage point 31 with the anchor member 18 via the anchorage assembly 316.

It should be appreciated that the anchorage assembly 316 and the associated translatable anchorage point 31 may be provided as an alternative to utilizing a buckle assembly 16 with its own respective translatable anchorage point 31. However, some embodiments of seat assemblies 11 disclosed herein may include both the buckle assembly 16 and anchorage assembly 316, each including its own respective translatable anchorage point 31 for translating the buckle assembly 16 or anchorage assembly 316, respectively, forwards and downwards to pre-tension the lap belt 12. For instance and in some embodiments, the vehicle seat assembly 11 may further include the anchorage assembly 316 (see FIG. 3) coupled to the seat bottom 19 and/or seat base 21 opposite the buckle assembly 16 (see FIGS. 2-3) at an additional anchorage point 31. The additional anchorage point 31 may also be adapted to translate forwards and downwards relative to the seat bottom 19, seat base 21, and/or seat assembly 11 upon detection of the impact event or impending impact event, thereby further pre-tensioning the lap belt 12 coupled to the anchorage assembly 316. In some such embodiments or alternative embodiments, the vehicle seat assembly 11 may further include an additional pre-tensioner 44 operably coupled between the anchorage assembly 316 and the seat bottom 19 and/or seat base 21. The additional pre-tensioner 44 may be configured to translate the additional anchorage point 31 forward and downwards relative to the seat bottom 19, seat base 21, and/or seat assembly 11 upon detection of the impact even or impending impact event.

Referring now specifically to FIG. 4, the seat assembly 11 of the present disclosure may include the seat back 25 pivotably coupled to the seat bottom 19. Optionally, the seat back 25 is able to be highly reclined with respect to the seat bottom 19. The lap belt 12 and/or a shoulder belt 20 are provided to secure a vehicle occupant in the seat assembly 11 when buckled, as is conventional. Here, the lap belt 12 traverses a lap of the vehicle occupant from the buckle assembly 16 on one side of the seat assembly 11 and the anchorage assembly 316 and/or anchor member 18 (see FIG. 3) on the other side of the seat assembly 11. Either or both of the buckle assembly 16 and the anchorage assembly 316 may be pivotably or fixedly coupled to the seat bottom 19 and/or seat base 21 at the translatable anchorage point(s) 31. Per the present disclosure, one or more of these anchorage points 31 are movable upon detection or in anticipation of an impact event via a rapid pre-tensioning mechanism, thereby snugging the lap belt to the pelvis of the vehicle occupant, when the seat assembly 11 is in a highly reclined configuration.

As illustrated, when an impact event is detected or anticipated, the anchorage point(s) 31 is translated forwards and downwards, thereby translating the buckle assembly 16 and/or anchorage assembly 316 forwards and downwards to pre-tension the lap belt 12. Such forward and downward translation may generally be defined relative to the seat assembly 11, the seat bottom 19, and/or seat base 21. Again, the forwards anchorage point movement may be 50 mm or more, while the downwards anchorage point movement may also be 50 mm or more.

Described below in FIGS. 5-7 are exemplary configurations, components, etc. of translatable anchorage points and associated pre-tensioners that may be utilized with buckle assemblies 16, anchorage assemblies 316, seat assemblies 11, occupant restraint systems 100, and/or vehicles 11, as described herein. However, persons skilled in the art will appreciate that the present disclosure is equally applicable to additional or alternative translatable anchorage points and associated pre-tensioners configured to translate suitably configured seat belt buckles, buckle assemblies, anchor members, and/or anchorage assemblies forwards and downwards to pre-tension associated lap belts.

Referring now specifically to the exemplary embodiment of FIG. 5, the buckle assembly 16 and/or anchorage assembly 316 may be pivotably or fixedly coupled to the seat bottom 19 and/or seat base at the anchorage point 31. In some embodiments and as shown, the anchorage point(s) 31 may include or be defined by one or more track structures 42 coupled to the side of the seat bottom 19 and/or seat base 21. The buckle assembly 16 and/or anchorage assembly 316 may be translated by rapidly moving the anchorage point(s) 31 along the track structure 42 (e.g., forward and downward translation relative to vehicle 10, seat assembly 11, seat bottom 19, and/or seat base 21). In the embodiment illustrated, this track structure 42 may be oriented forwards and downwards from an anchorage point start position to an anchorage point stop position.

As further shown in FIG. 5, actuation and/or translation of the anchorage point(s) 31 may be provided by one or more pre-tensioners 44. Thus, embodiments of the vehicle seat assembly 11 provided herein may include the pre-tensioner(s) 44 coupled between the buckle assembly 16 and/or the anchorage assembly 316 and the seat bottom 19 and/or the seat base 21. Generally, embodiments of the pre-tensioner 44 disclosed herein are suitable to translate an associated anchorage point 31 of a seat assembly 31 forward and downwards relative to the seat bottom 19, seat base 21, and/or seat assembly 11 upon detection of the impact even or impending impact event.

As shown in FIG. 5 and for some embodiments, the pre-tensioner(s) 44 may include one or more pyrotechnic actuators, well known to those of ordinary skill in the art. As mentioned above, this actuation can alternatively be provided by a mechanical actuator or an electronic actuator, with a control system and algorithm triggering actuation. Thus, a personal having ordinary skill in the art will appreciate that embodiments of the pre-tensioner(s) 44 may include suitably configured explosive actuators, mechanical actuators, electronic actuators, linear actuators, rotary actuators, servomotors, and the like configured to bias the anchorage point(s) 31 of the buckle assembly 16 and/or the anchorage assembly 316 downward and forward relative to the seat bottom 19, seat base 21, and/or seat assembly 11 upon detection of the impact even or impending impact event.

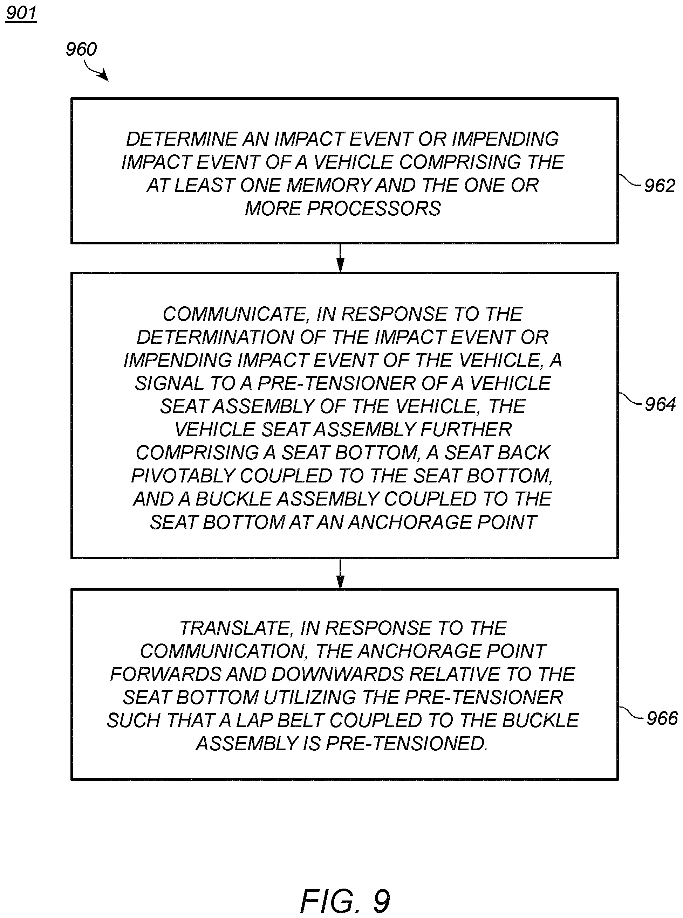

Some embodiments of the pre-tensioner(s) 44, such as pyrotechnic actuators, are designed to be utilized once and provide a predetermined biasing force on the anchorage point(s) 31. Other embodiments of the pre-tensioner(s) 44 may be configured to provide a variable biasing force to translate the anchorage points(s) 31 such that the degree of pre-tensioning is determined by the degree of translations, which itself is determined by the amount of biasing force provided by the pre-tensioner 44. For instance, a suitably configured controller may control the amount of biasing force provided by the pre-tensioner(s) 44 based on detection or prediction of one or more inputs or prerequisite conditions, as will be described below. In some such embodiments, the associated controller and pre-tensioner(s) 44 may be configured to provide proportional control based on one or more inputs indicating a reclination angle of the occupant of an associated seat assembly 11 and/or a determined or predicted impact severity. Additional or alternative embodiments of the pre-tensioner(s) 44 and/or associated controller(s) may be configured to translate the anchorage point(s) 31 forwards and downwards a first amount in response a first signal and a second amount, different than the first amount, in response to a second signal, different from the first signal. Embodiments of suitable control systems and control logic for controlling operation of the pre-tensioner(s) 44 are described in more detail below with respect to FIGS. 8 and 9.

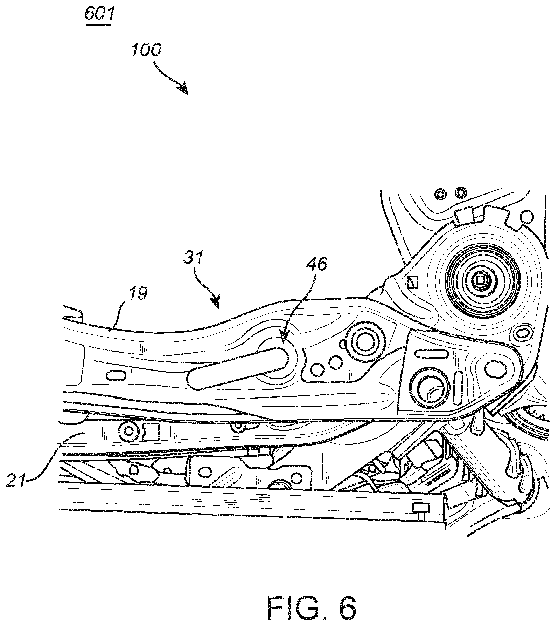

Referring now specifically to FIG. 6, an additional or alternative embodiment of a translatable anchorage point is illustrated in accordance with aspects of the present subject matter. As shown, some embodiments of the anchorage point 31 include or are defined by a slot 46 defined in the seat bottom 19 and/or seat base 21. Thus, the buckle assembly 16 and/or anchorage assembly 316 (FIG. 3) may be pivotably or fixedly coupled to the seat bottom 19 and/or seat base 21 at the anchorage point 31, which may be translated by rapidly moving the anchorage point 31 along the slot 46 manufactured in the side of the seat bottom 19 and/or seat base 21. In the embodiment illustrated, this slot 46 is also oriented forwards and downwards from an anchorage point start position (e.g., top-right position of slot 46 of FIG. 6) to an anchorage point stop position (e.g., bottom-left position of slot 46 of FIG. 6). Actuation may be provided by one or more pre-tensioners 44 as described herein, such as by a pyrotechnic actuator (FIG. 4), well known to those of ordinary skill in the art. As mentioned above, this actuation can additionally or alternatively be provided by a mechanical actuator, an electronic actuator, a linear actuator, a rotary actuator, a servomotor, or the like with a control system and algorithm triggering actuation.

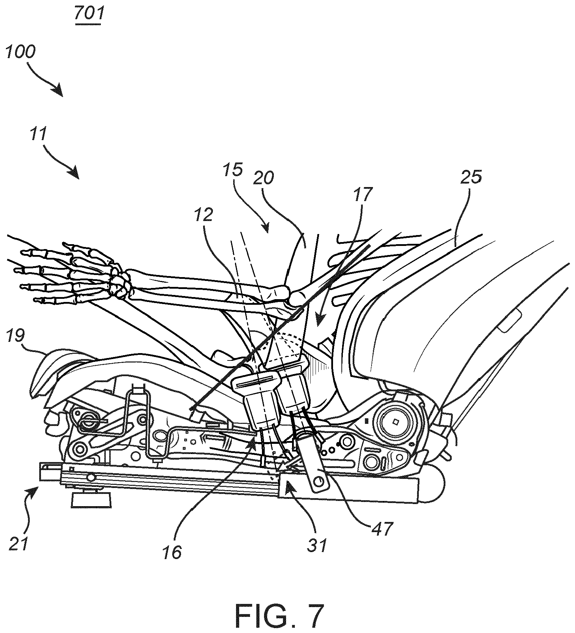

Referring now specifically to FIG. 7, an additional or alternative embodiment of a translatable anchorage point is illustrated in accordance with aspects of the present subject matter. As shown, some embodiments of the anchorage point 31 include or are defined by a lever 47 coupled between the the seat bottom 19 and/or seat base 21 and the translatable anchorage point 31, the buckle assembly 16, and/or anchorage assembly 316 (FIG. 3). Thus, the buckle assembly 16 and/or anchorage assembly 316 may be pivotably or fixedly coupled to the seat bottom 19 and/or seat base 21 at the anchorage point 31, which may be translated by rapidly rotating the lever 47 relative to the seat bottom 19 and/or seat base 21. Such rotation of the lever 47 may move the anchorage point 31 forward and downward relative to the seat bottom 19, seat base 21, and/or seat assembly 11. In the embodiment illustrated, the lever 47 is positioned to define the anchorage point start position (e.g., such that the anchorage point 31 is positioned top-right). As also shown in FIG. 7, the lever 47 may be rotated (e.g., counterclockwise rotation for the configuration of the seat assembly 11 of FIG. 7) to position the lever 47 and anchorage point 31 at the anchorage point stop position (e.g., such that the anchorage point 31 is positioned bottom-left).

Actuation may be provided by one or more pre-tensioners 44 as described herein, such as by a pyrotechnic actuator (FIG. 4) well known to those of ordinary skill in the art. As mentioned above, this actuation can additionally or alternatively be provided by a mechanical actuator, an electronic actuator, a linear actuator, a rotary actuator, a servomotor, or with like, with a control system and algorithm triggering actuation. For instance, a rotary actuator may be operably coupled between the lever 47 and the seat bottom 19 and/or seat base 21.

Referring now generally to FIGS. 2-7, the vehicle seat assembly of the present disclosure may utilize a seat belt buckle pre-tensioning system that is integrated into the seat structure. When an impact event is detected (or anticipated), the seat belt buckle anchorage point 31 is rapidly moved forwards and downwards such that the coupled lap belt 12 is pre-tensioned and moved into a position that optimizes lap belt geometry and prevents submarining during the impact event, especially in the case that the occupant is in a moderately to highly reclined seating position. This may be done using an explosive pre-tensioner, a mechanical pre-tensioner, and/or an electronic pre-tensioner with an appropriate controller and may be applied to the lap belt anchorage point(s) 31 on one or both sides of the seat assembly 11. By way of example, the forwards anchorage point movement may be 50 mm or more, while the downwards anchorage point movement may also be 50 mm or more. This serves to ensure that the occupant's pelvic bone 17 adequately engages the lap belt 12 of the seat assembly 11 and does not slide under the lap belt 12 during the impact event, thus preventing submarining.

Referring now to FIG. 8, a schematic diagram of an exemplary embodiment of a vehicle occupant restraint system is illustrated in accordance with aspects of the present subj ect matter. The occupant restraint system 100 may include one or more seat assemblies and associated seat belt assemblies configured the same or similar to one or more of the seat belt assemblies 15 described with respect to FIGS. 2-7 or suitably configured seat belt assemblies 15. While the occupant restraint system 100 of FIG. 8 illustrates an exemplary number of seat belt assemblies 15 and associated components (e.g., seat assemblies 11, buckle assembly(ies) 16, and/or anchorage assemblies 316), the occupant restraint system 100 may include any other number of suitable seat assemblies 11, suitable seat belt assemblies 15, number of seats, rows of seats, seats per row, doors, rows of doors, etc. Furthermore and as shown, each seat belt assembly 15 may include the buckle assembly 16 and/or anchorage assembly 316 (e.g., any of the buckle assemblies 16 and/or anchorage assemblies 316 described with respect to FIGS. 2-7, other suitably configured buckle assemblies and/or anchorage assemblies, the same configuration of the buckle assembly 16 and/or anchorage assembly 316 for each seat belt assembly 15, or differently configured buckle assembly 16 and/or anchorage assembly 316 for at least two seat belt assemblies 15).

For example, each buckle assembly 16 may include a translatable anchorage point 31 (omitted from FIG. 8) coupling the buckle assembly 16 to the seat bottom 19 and/or seat base 21. In some such configurations or other configurations, each anchorage assembly 316 may include a translatable anchorage point 31 coupling the anchorage assembly 316 to the seat bottom 19 and/or seat base 21. Generally, a seat assembly 11 including at least one translatable anchorage point 31 may be referred to herein as a tensioning seat assembly. While omitted from FIG. 8 for clarity, each tensioning seat assembly 11 may include a pre-tensioner 44 (see FIG. 5) operably coupled between the seat bottom 19 and/or seat base 21 and the buckle assembly 16 and/or anchorage assembly 316 including a translatable anchorage point(s) 31, as described herein. As explained above, the pre-tensioner 44 is configured to translate the anchorage point(s) 31 of the buckle assembly 16 and/or anchorage assembly 316 forwards and downwards relative to the seat bottom 19 and/or seat base 21 upon detection of an impact event or impending impact event, thereby pre-tensioning a lap belt 12 coupled to the buckle assembly 16 and/or anchorage assembly 316. Furthermore and in some embodiments, at least one seat assembly 11 may not include a translatable anchorage point 31 allowing forward and downward translation of the buckle assembly 16 or anchor member 18 (e.g., a non-tensioning seat assembly).

As shown, the occupant restraint system 100 may further include a control unit 836 (e.g., an electronic control unit, multiple associated control units, and/or a combination of one or more processing devices and at least one memory or memory device as described herein) communicatively coupled to each tensioning seat assembly 11, the buckle assembly(ies) 16, and/or anchorage assembly(ies) 316 and configured to direct operation of one or more components, mechanisms, etc. of the same. While a single control unit 836 is illustrated in FIGS. 8 for simplicity, it should be appreciated that the control unit 836 may include multiple associated control units that together are configured to provide operational control of the buckle assembly(ies) 16 and/or anchorage assembly(ies) 316, as described in more detail below. Generally, the control unit 836 may be configured to cause the anchorage point(s) 31 of one or more selected tensioning seat assemblies 15 of the tensioning seat assemblies 11 to translate forwards and downwards relative to the seat bottom 19 and/or seat base 21 upon detection of an impact event or impending impact event and thereby pre-tension or further pre-tension the lap belt 12 coupled to the buckle assembly 16 and/or anchorage assembly 316.

As shown, the control unit 836 may provide operational control of the tensioning seat belt assembly(ies) 15 (such as the buckle assembly(ies) 16 and/or anchorage assembly(ies) 312 thereof) of the occupant restraint system 100 and may be communicatively coupled with various additional or alternative components of the vehicle 10 or associated with the vehicle 10, as described in more detail below. While some communication links in FIG. 8 may be illustrated as joint communication links, it should be appreciated that one or more components communicatively coupled to the control unit 836, such as all of the components, may have component dedicated communication links.

In some embodiments and as shown, the control unit 836 may include or be communicatively coupled with one or more external devices 843 such as a mobile device, cell phone, or the like (e.g., mobile device 845). The mobile device 843 may communicate inputs to the control unit(s) 836 utilized to control operation of the buckle assembly(ies) 16 and/or anchorage assembly(ies) 316. As also shown in FIG. 8, the external device(s) 843 communicatively coupled to the control unit 836 may include one or more remote servers, processing units, memory devices, computing devices, or the like (e.g., remote computing device 849).

By applying an appropriate algorithm in the control unit 836, the occupant restraint system 100 can be integrated with the rest of the vehicle systems, with input from/output to, for instance, crash detection/anticipation sensors and/or occupant posture detection sensors. In the exemplary embodiment shown in FIG. 8, the vehicle 10 and/or occupant restraint system 100 may include crash detection/anticipation system and/or any number of accelerometers, other sensors, cameras, LIDAR sensors, RADAR sensors, and/or other perception sensors (see e.g., crash sensors 844, 846, and 848) ) configured to communicate signals/data to the control unit 836 indicative of an impact event, an anticipated impact event, and/or a severity of the impact event or anticipated impact event.

Furthermore and for the illustrated embodiments, the vehicle 10 and/or occupant restraint system 100 may include an occupant posture detection system, which may include one or more internal occupant sensors 852 (e.g., sensors, camera, LIDAR sensors, RADAR sensors, inferred sensors, optical sensors, and/or other perception sensors) configured to communicate signals/data to the control unit 836 indicative of a reclination angle of each occupant of a tensioning seat assembly 11, as described herein. Additionally or alternatively, the vehicle 10, occupant restraint system 100, occupant posture detection system, and/or the seat assembly(ies) 11 may include one or more seat actuators 854. The seat actuators 854 may generally be configured to alter a reclination angle of the seat back 25 and/or seat bottom 19 of respective seat assemblies 11. Some such embodiment of seat actuators 854 (e.g., a servomotor) may be configured to provide feedback via a signal and/or data communicated to the control unit 836 and indicative of at least the reclination angle of the seat back 25, the seat bottom 19, and/or an occupant of the respective seat assembly 11. Additionally or alternatively, embodiments of seat actuators 854 and/or seat assemblies 11 disclosed herein may include a sensor, circuit, or the like suitable to communicate a signal indicative of an orientation of the respective seat bottom 19 and/or seat back 25 with respect to a known/starting orientation of the respective seat bottom 19 and/or seat back 25, which may be sufficient to determine the reclination angle of the seat back 25 and/or seat bottom 19, respectively, with respect to the vehicle 10.

It should be appreciated that the reclination of the angle of the seat back 25 may indicate the reclination angle of the occupant (e.g., the angle of the occupant's upper body with respect to the seat bottom 19). Similarly, the reclination angle of the seat bottom 19 may indicate the reclination angle of the occupant. In embodiments of the seat assembly 11 including both an adjustable seat back 25 and seat bottom 19, the reclination angles of the seat back 25 and the seat bottom 19 together may indicate the reclination angle of the occupant. Additionally or alternatively, the internal occupant sensors 852 may communicate signals/data to the control unit 836 sufficient to determine the reclination angle of an occupant's upper body with respect to the seat bottom 25 without knowing the reclination angle of the seat back 25 and/or seat bottom 19 with respect to the vehicle 10.

Generally, the control unit 836, crash detection/anticipation system, and/or crash sensor(s) 844, 846, 848 first detect an impact or impending impact event. Simultaneously or in advance of this, the control unit 836, the occupant posture detection system, the internal occupant sensor(s) 852, and/or the seat actuator(s) 854 detect or determine an occupant/seat position (upright, slightly reclined, highly reclined, etc.). Based on these observations, under predetermined postural circumstances and the detection of the impact or impending impact event, the pre-tensioner(s) 44 (see FIG. 5) is actuated to rapidly translate the anchorage point(s) 31 forwards and downwards, thereby pre-tensioning the lap belt 12 in advance of the impact event, thereby providing a lap belt geometry that is optimized to avoid submarining, such as when the seat back 25 is in a highly reclined configuration. For example, the lap belt 12 may be pre-tensioned in any impact event or only when certain seat position/occupant posture criteria are met. Further, based on the severity of the impact event and/or the seat position/occupant posture, the degree of lap belt pre-tensioning may be controlled.

Referring now to FIG. 9, one exemplary embodiment of a method for controlling a system for operating pre-tensioners of a seat belt assembly of an occupant restraint system in order to pre-tension a lap belt thereof is illustrated in accordance with aspects of the present disclosure. The method or process (method 960) may be implemented utilizing or in conjunction with embodiments of the occupant restraint system 100 and/or control unit 836 for operating/controlling the translatable seat assembly(ies) 15, the buckle assembly(ies) 16, the anchorage assembly(ies) 316, and/or the pre-tensioner(s) 44, as described herein, or other similar or suitably configured occupant restraint systems, control units, vehicles, buckle assembly(ies), anchorage assembly(ies), pre-tensioner(s), and/or systems for operating/controlling restraint buckles and/or anchorage points that are translatable forward and downward upon the detection or in anticipation of an impact event to pre-tension an associated lap belt.

As shown and for some embodiments, the steps may include determining an impact event or impending impact event of a vehicle (step 962). For example and as shown in FIG. 8, control unit 836 may determine an impact event or an impending impact event of the vehicle 10 based on one or more communications or data received from the crash sensor(s) 844, 846, 847. The method 960 may further include (step 964) communicating, in response to the determination of the impact event or impending impact event of the vehicle, a signal to a pre-tensioner of a vehicle seat assembly of the vehicle. For instance, the control unit 836 may communicate a signal (e.g., electrical signal, modulated power supply, or the like) to the pre-tensioner(s) 44, which may cause such pre-tensioner(s) 44 to activate and translate associated anchorage point(s) 31 of the buckle assembly(ies) 16 and/or anchorage assembly(ies) 316 forward and downward. Thus and as shown (step 966), the method 960 may include translating, in response to the communication, the anchorage point forwards and downwards relative to the seat bottom utilizing the pre-tensioner such that a lap belt coupled to the buckle assembly is pre-tensioned. As explained above, such translation of the anchorage point(s) 31 of the buckle assembly(ies) 16 and/or anchorage assembly(ies) 316 may pre-tension or further pre-tension the lap belt(s) 12 coupled thereto and/or promote a belt assembly geometry capable of properly engaging the pelvic bone(s) 17 of the respective occupant(s) to prevent submarining.

In some embodiments, the method 960 may include determining a reclination angle of an occupant of the vehicle seated in the vehicle seat assembly. For instance, the control unit 836 may determine the reclination angle(s) of the occupant(s) of the vehicle 10 seated in the seat assembly(ies) 11 based on one or more communications or data received from the occupant sensor(s) 852 and/or the seat actuator(s) 854 or associated sensors, circuits, or the like. In some embodiments, the signal activating the pre-tensioner(s) 44 may only be communicated to the pre-tensioner(s) 44 when it is determined that the reclination angle is over a threshold angle. For instance, the control unit 836 may communicate the signal to activate the pre-tensioner(s) 44 when a determined reclination angle of the respective occupant(s) (e.g., a reclination angle of the upper body of the occupant(s) and/or the seat back 25 relative to the respective seat bottom(s) 19) is greater than a threshold angle. It should be appreciated that the threshold angle may be a predetermined threshold angle where reclination angles less than the threshold angle are unlikely or less likely to result in submarining of the associated passenger, at least for some levels of crash severity. Contrarily, reclination angles greater than the threshold angle may be likely or more likely to result in submarining of the associated passenger, at least for some levels of crash severity.

As explained above, some embodiments of the pre-tensioner(s) 44 may be configured to provide a variable biasing force to translate the anchorage points(s) 31 such that the degree of pre-tensioning is determined by the degree of translations, which itself is determined by the amount of biasing force provided by the pre-tensioner 44. Thus, various embodiments of the pre-tensioners 44 described herein may be configured to translate the associated anchorage point 31 different amounts based on the signal communicated to the respective pre-tensioner 44. Additionally or alternatively, one or more anchorage points 31, as described herein, may be configured to translate forward and downward by two or more pre-tensioner(s) 44 operating individually or in combination. For instance, activation of a first pre-tensioner 44 may translate the anchorage point 31, the associated buckle assembly 16, and/or the associated anchorage assembly 316 forward and downward a first amount. Furthermore or alternatively, activation of a second pre-tensioner 44 may translate the anchorage point 31, the associated buckle assembly 16, and/or the associated anchorage assembly 316 forward and downward a second amount different than the first amount. Furthermore or alternatively, activation of both of the first and the second pre-tensioners 44 may translate the anchorage point 31, the associated buckle assembly 16, and/or the associated anchorage assembly 316 forward and downward a third amount different than both the first amount and the second amount.

In some embodiments, the control unit 836 may further determine whether the reclination angle(s) of the occupant(s) is above or below an additional threshold angle. The additional threshold angle may be another predetermined threshold angle where reclination angles less than the additional threshold angle (but more than the threshold angle) are likely to result in submarining of the associated passenger, at least for some levels of crash severity. Contrarily, reclination angles greater than the additional threshold angle may be more likely to result in submarining of the associated passenger as compared to reclination angles less than the additional threshold angle, at least for some levels of crash severity.

Thus and in various embodiments of the method 960, the signal communicated from the control unit 836 to the pre-tensioner(s) 44 may include a first signal when the reclination angle of the respective occupant is over the threshold angle and below an additional threshold angle. Additionally or alternatively, the signal communicated from the control unit 836 to the pre-tensioner(s) 44 may include a second signal, different than the first signal, when the reclination angle of the respective occupant is over the threshold angle and the additional threshold angle. In some such embodiments, the pre-tensioner(s) 44 may be configured to translate the associated anchorage point(s) 31 forwards and downwards a first amount in response the first signal and a second amount, different than the first amount, in response to the second signal. It should be appreciated that embodiments of the pre-tensioner(s) 44 may be configured to translate the associated anchorage point(s) 31 forwards and downwards a third amount, different than the first and second amounts, in response a third signal, different than the first and second signals, and so forth.

As explained above, some embodiments of the seat belt assembly 15 may include both the buckle assembly 16 and the anchorage assembly 316, each including an anchorage point 31 translatable via one or more associated pre-tensioner(s) 44. In some such embodiments, the control unit 836 may be configured to communicate the first signal (e.g., when the determined reclination angle is above the threshold angle) to the pre-tensioner(s) 44 of one of the buckle assembly 16 or the anchorage assembly 316 to pre-tension the associated lap belt 12. In this configuration as well as other configurations, the control unit 836 may communicate the second signal (e.g., when the determined reclination angle is above the additional threshold angle) to the pre-tensioner(s) 44 of other of the buckle assembly 16 and the anchorage assembly 316 to further pre-tension the associated lap belt 12.

Some additional or alternative embodiments of the method 960 may include determining a severity of the impact event or impending impact event. For instance, the crash sensors 844, 846, 848; the crash detection/anticipation system; and/or the control unit 836 may be utilized to determine the crash severity. Additionally or alternatively, the occupant restraint system 100 and/or control unit 836 can be integrated with the rest of the vehicle systems, with input from/output to a vehicle powertrain, a vehicle motor, a vehicle transmission, a vehicle power supply, an infotainment unit or system, etc., and such input may be utilized to determine the crash severity. The determined impending or anticipated crash severity may be based, at least in part, on the velocity of the vehicle 10, the relative velocity of the vehicle 10 and a crash object, an actual or anticipated impact location of the vehicle 10, and actual or anticipated crash geometry of the vehicle 10 and crash object, determined characteristics of the crash object, the deceleration/acceleration of the vehicle 10, the jerk of the vehicle 10, traction information of the vehicle 10, and/or breaking information of the vehicle 10 (e.g., the activation of an anti-lock braking system, a determined/effective braking force, activation of an automatic breaking system, and the like).

Based on any of the above crash features and/or other suitable features/input data, the control unit 836 may determine a crash severity by utilizing an appropriate algorithm. Thus and in some embodiments, the signal activating the pre-tensioner(s) 44 may only be communicated to the pre-tensioner(s) 44 when it is determined that the crash severity is over a threshold severity. It should be appreciated that the threshold severity may be a predetermined threshold severity where determined crash severities less than the threshold severity are unlikely or less likely to result in submarining of the associated passenger, at least for some occupant reclination angles. Contrarily, determined crash severities greater than the threshold severity may be likely or more likely to result in submarining of the associated passenger compared to determined crash severities less than the threshold severity, at least for some occupant reclination angles.

In additional or other embodiments, the control unit 836 may further determine whether the crash severity is above or below an additional threshold severity. The additional threshold severity may be another predetermined threshold severity where determined crash severities less than the additional threshold severity (but greater than the threshold severity) are likely to result in submarining of the associated passenger, at least for some occupant reclination angles. Contrarily, determined crash severities greater than the additional threshold severity may be more likely to result in submarining of the associated passenger as compared to severities less than the additional threshold severity, at least for some occupant reclination angles. In various embodiments of the method 960, the signal activating the pre-tensioner(s) 44 may include the first signal when the severity of the impact event or impending impact event is over the threshold severity and below the additional threshold severity. Additionally or alternatively, the signal activating the pre-tensioner(s) 44 may include the second signal when the severity of the impact event or impending impact event is over the threshold severity and the additional threshold severity. As explained above, the pre-tensioner(s) 44 may be configured to translate the anchorage point(s) 31 forwards and downwards the first amount in response the first signal and the second amount (e.g., a greater amount) in response to the second signal.

In additional or alternative embodiments, the control unit 836 may determine the threshold angle and/or the additional threshold angle based at least in part on the determined crash severity of the impact event or impending impact event. Additionally or alternatively, the control unit 836 may determine the threshold severity and/or the additional threshold severity based at least in part on the determined reclination angle(s) of the associated occupant(s) of the tensioning seat assembly(ies) 15. In still further or alternative embodiments, the control unit 836 may apply an appropriate algorithm and communicate the signal, the first signal, and/or the second signal or no signal based on data communicated to the control unit 836 indicative of a reclination angle of each occupant of a tensioning seat assembly 11 (e.g., data communicated from the occupant sensor(s) 852 and/or the seat actuator(s) 854 or associated sensors, circuits, or the like) and data communicated to the control unit 836 indicative of a crash severity of an impact event or impending impact event (e.g., crash feature data communicated from the crash sensors 844, 846, 848).

In some embodiments, the method 960 may include communicating an incident signal to a remote computing device 843, in response to communicating the signal(s) to the pre-tensioner(s) 44 of the vehicle 10. Alternatively, such incident signal may be communicated by the control unit 836 in response to a determination that the signal, first signal, and/or second signal should be communicated to one or more pre-tensions 44 of the vehicle 10. Such incident signal may be utilized to generate or cause generation of one or more notifications to first responders, medical providers, guardians of the occupant(s), family members of the occupant(s), emergency contact(s) of the occupant(s), and/or other vehicles 10 utilizing the same or similar occupant restraint systems and components thereof, as described herein. Such incident signal and/or notification may indicate one or more of pre-tensioning of lap belt(s) 12 of the vehicle 10, activation of the pre-tensioner(s) 44, the determined reclination angle(s) of the occupant(s) of the vehicle 10, the determined crash severity of the impact event or impending impact event, and/or inputs utilized to calculate any of the above, as described herein.

In some embodiments, the method 960 may include receiving a report signal communicated from a remote computing device 843 indicating at least one of a leading vehicle impact event or utilization of a leading vehicle pre-tensioner of a leading vehicle at a route position shared with the vehicle. For example, the report signal may include or be based on the incident signal of the leading vehicle and/or the corresponding notification(s). In various embodiments, such report signal may be indicative of, at least, a crash severity of an impact event or impending impact event of the leading vehicle or inputs utilized to determine the same (e.g., crash feature data communicated from respective crash sensors 844, 846, 848 or other vehicle system data) and/or a travel time or travel distance between the vehicle 10 and the leading vehicle. Thus, the impact event or impending impact event and/or the severity thereof for the vehicle 10 may be determined, at least in part, based on the report signal.

In additional or alternative embodiments, the method 960 may include, given a seat assembly including a seat bottom, a seat back pivotably coupled to the seat bottom, and a buckle assembly coupled to the seat bottom at an anchorage point, translating the anchorage point forwards and downwards relative to the seat bottom upon detection of an impact event or impending impact event, thereby pre-tensioning a lap belt couped to the buckle assembly. Additionally or alternatively, the method may include, given an anchorage assembly coupled to the seat bottom opposite the buckle assembly at an additional anchorage point, translating the additional anchorage point forwards and downwards relative to the seat bottom upon detection of the impact event or impending impact event, thereby further pre-tensioning the lap belt couped to the anchorage assembly.

It is to be recognized that, depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

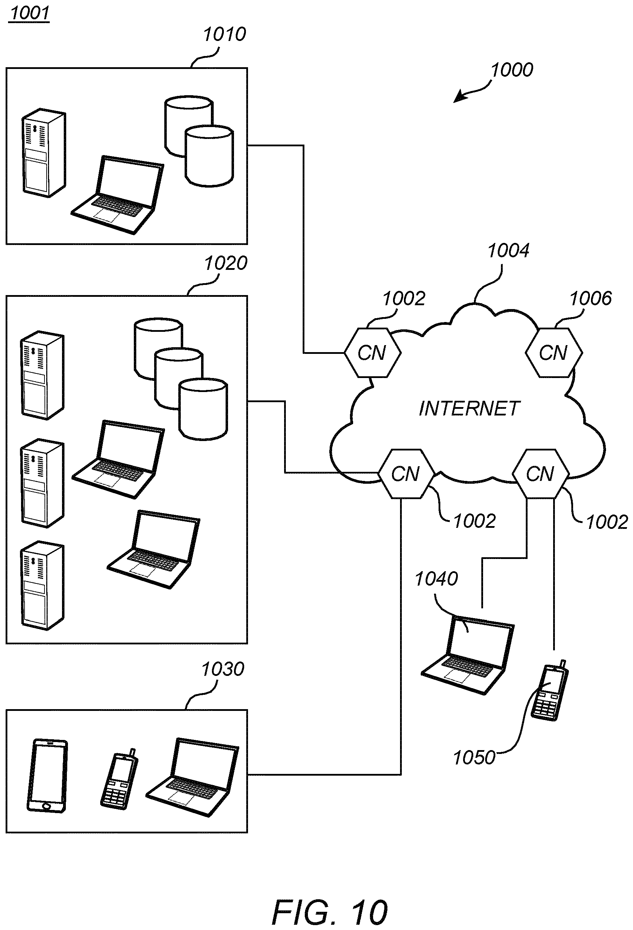

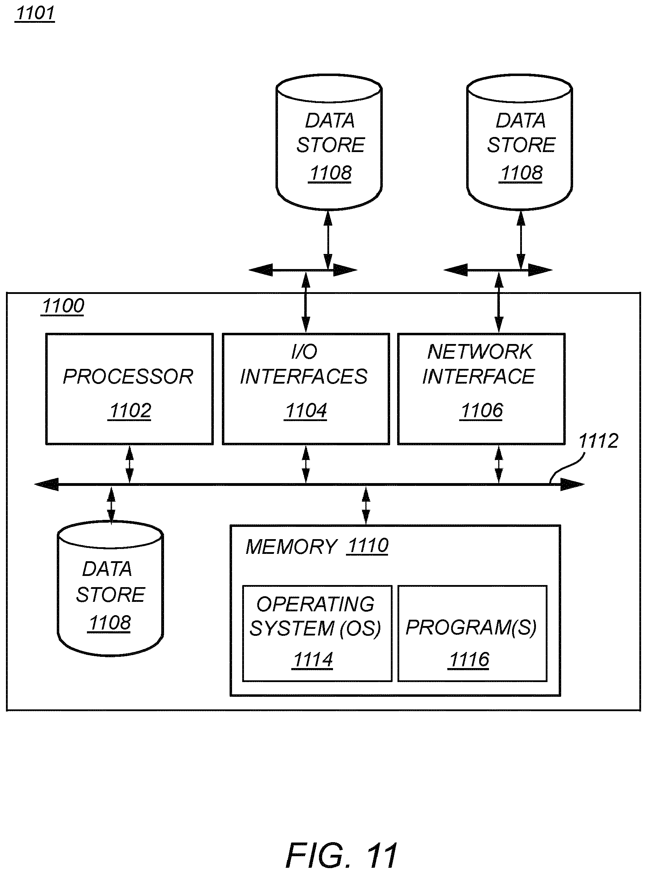

FIG. 10 is a network diagram of a cloud-based system 1000 for implementing various cloud-based services of the present disclosure. The cloud-based system 1000 includes one or more cloud nodes (CNs) 1002 communicatively coupled to the Internet 1004 or the like. The cloud nodes 1002 may be implemented as a server 1100 (as illustrated in FIG. 11) or the like and can be geographically diverse from one another, such as located at various data centers around the country or globe. Further, the cloud-based system 1000 can include one or more central authority (CA) nodes 1006, which similarly can be implemented as the server 1000 and be connected to the CNs 1002. For illustration purposes, the cloud-based system 1000 can connect to a regional office 1010, headquarters 1020, various employee's homes 1030, laptops/desktops 1040, and mobile devices 1050, each of which can be communicatively coupled to one of the CNs 1002. These locations 1010, 1020, and 1030, and devices 1040 and 1050 are shown for illustrative purposes, and those skilled in the art will recognize there are various access scenarios to the cloud-based system 1000, all of which are contemplated herein. The devices 1040 and 1050 can be so-called road warriors, i.e., users off-site, on-the-road, etc. The cloud-based system 1000 can be a private cloud, a public cloud, a combination of a private cloud and a public cloud (hybrid cloud), or the like.

Again, the cloud-based system 1000 can provide any functionality through services, such as software-as-a-service (SaaS), platform-as-a-service, infrastructure-as-a-service, security-as-a-service, Virtual Network Functions (VNFs) in a Network Functions Virtualization (NFV) Infrastructure (NFVI), etc. to the locations 1010, 1020, and 1030 and devices 1040 and 1050. Previously, the Information Technology (IT) deployment model included enterprise resources and applications stored within an enterprise network (i.e., physical devices), behind a firewall, accessible by employees on site or remote via Virtual Private Networks (VPNs), etc. The cloud-based system 1000 is replacing the conventional deployment model. The cloud-based system 1000 can be used to implement these services in the cloud without requiring the physical devices and management thereof by enterprise IT administrators.

Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. Centralization gives cloud service providers complete control over the versions of the browser-based and other applications provided to clients, which removes the need for version upgrades or license management on individual client computing devices. The phrase "software as a service" (SaaS) is sometimes used to describe application programs offered through cloud computing. A common shorthand for a provided cloud computing service (or even an aggregation of all existing cloud services) is "the cloud." The cloud-based system 1000 is illustrated herein as one example embodiment of a cloud-based system, and those of ordinary skill in the art will recognize the systems and methods described herein are not necessarily limited thereby.

FIG. 11 is a block diagram of a server 1100, which may be used in the cloud-based system 1000 (FIG. 10), in other systems, or stand-alone. For example, the CNs 1002 (FIG. 10) and the central authority nodes 1006 (FIG. 10) may be formed as one or more of the servers 1100. The server 1100 may be a digital computer that, in terms of hardware architecture, generally includes a processor 1102, input/output (I/O) interfaces 1104, a network interface 1106, a data store 1108, and memory 1110. It should be appreciated by those of ordinary skill in the art that FIG. 11 depicts the server 1100 in an oversimplified manner, and a practical embodiment may include additional components and suitably configured processing logic to support known or conventional operating features that are not described in detail herein. The components (1102, 1104, 1106, 1108, and 1110) are communicatively coupled via a local interface 1112. The local interface 1112 may be, for example, but is not limited to, one or more buses or other wired or wireless connections, as is known in the art. The local interface 1112 may have additional elements, which are omitted for simplicity, such as controllers, buffers (caches), drivers, repeaters, and receivers, among many others, to enable communications. Further, the local interface 1112 may include address, control, and/or data connections to enable appropriate communications among the aforementioned components.

The processor 1102 is a hardware device for executing software instructions. The processor 1102 may be any custom made or commercially available processor, a central processing unit (CPU), an auxiliary processor among several processors associated with the server 1100, a semiconductor-based microprocessor (in the form of a microchip or chipset), or generally any device for executing software instructions. When the server 1100 is in operation, the processor 1102 is configured to execute software stored within the memory 1110, to communicate data to and from the memory 1110, and to generally control operations of the server 1100 pursuant to the software instructions. The I/O interfaces 1104 may be used to receive user input from and/or for providing system output to one or more devices or components.

The network interface 1106 may be used to enable the server 1100 to communicate on a network, such as the Internet 904 (FIG. 9). The network interface 1106 may include, for example, an Ethernet card or adapter (e.g., 10BaseT, Fast Ethernet, Gigabit Ethernet, or 10GbE) or a Wireless Local Area Network (WLAN) card or adapter (e.g., 802.11a/b/g/n/ac). The network interface 1106 may include address, control, and/or data connections to enable appropriate communications on the network. A data store 1108 may be used to store data. The data store 1108 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1108 may incorporate electronic, magnetic, optical, and/or other types of storage media. In one example, the data store 1108 may be located internal to the server 1100, such as, for example, an internal hard drive connected to the local interface 1112 in the server 1100. Additionally, in another embodiment, the data store 1108 may be located external to the server 1100 such as, for example, an external hard drive connected to the I/O interfaces 1104 (e.g., a SCSI or USB connection). In a further embodiment, the data store 1108 may be connected to the server 1100 through a network, such as, for example, a network-attached file server.

The memory 1110 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 1110 may incorporate electronic, magnetic, optical, and/or other types of storage media. Note that the memory 1110 may have a distributed architecture, where various components are situated remotely from one another but can be accessed by the processor 1102. The software in memory 1110 may include one or more software programs, each of which includes an ordered listing of executable instructions for implementing logical functions. The software in the memory 1110 includes a suitable operating system (O/S) 1114 and one or more programs 1116. The operating system 1114 essentially controls the execution of other computer programs, such as the one or more programs 1116, and provides scheduling, input-output control, file and data management, memory management, and communication control and related services. The one or more programs 1116 may be configured to implement the various processes, algorithms, methods, techniques, etc. described herein.

It will be appreciated that some embodiments described herein may include one or more generic or specialized processors ("one or more processors") such as microprocessors; central processing units (CPUs); digital signal processors (DSPs); customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer-readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a Read-Only Memory (ROM), a Programmable Read-Only Memory (PROM), an Erasable Programmable Read-Only Memory (EPROM), an Electrically Erasable Programmable Read-Only Memory (EEPROM), flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

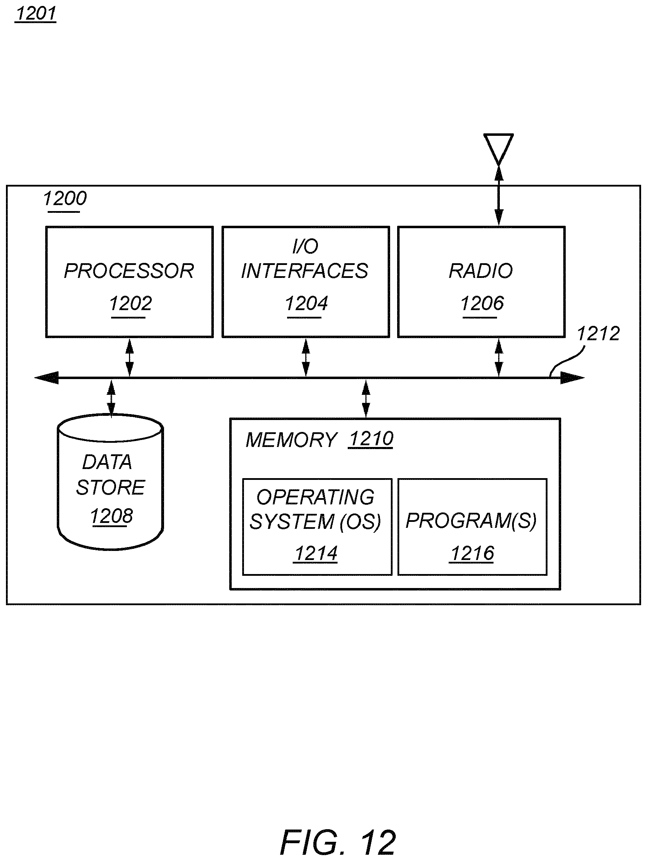

FIG. 12 is a block diagram of a user device 1200, which may be used in the cloud-based system 1000 (FIG. 10), as part of a network, or stand-alone. Again, the user device 1200 can be a vehicle (e.g., one or more control units thereof), a smartphone, a tablet, a smartwatch, an Internet of Things (IoT) device, a laptop, a virtual reality (VR) headset, etc. The user device 1200 can be a digital device that, in terms of hardware architecture, generally includes a processor 1202, I/O interfaces 1204, a radio 1206, a data store 1208, and memory 1210. It should be appreciated by those of ordinary skill in the art that FIG. 12 depicts the user device 1200 in an oversimplified manner, and a practical embodiment may include additional components and suitably configured processing logic to support known or conventional operating features that are not described in detail herein. The components (1202, 1204, 1206, 1208, and 1210) are communicatively coupled via a local interface 1212. The local interface 1212 can be, for example, but is not limited to, one or more buses or other wired or wireless connections, as is known in the art. The local interface 1212 can have additional elements, which are omitted for simplicity, such as controllers, buffers (caches), drivers, repeaters, and receivers, among many others, to enable communications. Further, the local interface 1212 may include address, control, and/or data connections to enable appropriate communications among the aforementioned components.

The processor 1202 is a hardware device for executing software instructions. The processor 1202 can be any custom made or commercially available processor, a CPU, an auxiliary processor among several processors associated with the user device 1200, a semiconductor-based microprocessor (in the form of a microchip or chipset), or generally any device for executing software instructions. When the user device 1200 is in operation, the processor 1202 is configured to execute software stored within the memory 1210, to communicate data to and from the memory 1210, and to generally control operations of the user device 1200 pursuant to the software instructions. In an embodiment, the processor 1202 may include a mobile optimized processor such as optimized for power consumption and mobile applications. The I/O interfaces 1204 can be used to receive user input from and/or for providing system output. User input can be provided via, for example, a keypad, a touch screen, a scroll ball, a scroll bar, buttons, a barcode scanner, and the like. System output can be provided via a display device such as a liquid crystal display (LCD), touch screen, and the like.

The radio 1206 enables wireless communication to an external access device or network. Any number of suitable wireless data communication protocols, techniques, or methodologies can be supported by the radio 1206, including any protocols for wireless communication. The data store 1208 may be used to store data. The data store 1208 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1208 may incorporate electronic, magnetic, optical, and/or other types of storage media.

Again, the memory 1210 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1210 may incorporate electronic, magnetic, optical, and/or other types of storage media. Note that the memory 1210 may have a distributed architecture, where various components are situated remotely from one another, but can be accessed by the processor 1202. The software in memory 1210 can include one or more software programs, each of which includes an ordered listing of executable instructions for implementing logical functions. In the example of FIG. 12, the software in the memory 1210 includes a suitable operating system 1214 and programs 1216. The operating system 1214 essentially controls the execution of other computer programs and provides scheduling, input-output control, file and data management, memory management, and communication control and related services. The programs 1216 may include various applications, add-ons, etc. configured to provide end user functionality with the user device 1200. For example, example programs 1216 may include, but not limited to, a web browser, social networking applications, streaming media applications, games, mapping and location applications, electronic mail applications, financial applications, and the like. In a typical example, the end-user typically uses one or more of the programs 1216 along with a network, such as the cloud-based system 1000 (FIG. 10).

Although the present disclosure is illustrated and described with reference to embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting Clauses and/or Claims for all purposes.

Clause 1: A vehicle comprising: a plurality of seat assemblies, at least one seat assembly of the plurality of seat assemblies configured as a tensioning seat assembly comprising: a seat bottom; a seat back pivotably coupled to the seat bottom; and a buckle assembly coupled to the seat bottom at an anchorage point; wherein the anchorage point is adapted to be translated forwards and downwards relative to the seat bottom upon detection of an impact event or impending impact event, thereby pre-tensioning a lap belt coupled to the buckle assembly.

Clause 2: The vehicle of Clause 1, wherein each seat assembly of the plurality of seat assemblies is configured as the tensioning seat assembly.

Clause 3: The vehicle of any one of the preceding Clauses, wherein multiple of the plurality of seat assemblies are each configured as the tensioning seat assembly.

Clause 4: The vehicle of any one of the preceding Clauses, wherein the vehicle further comprises a controller communicatively coupled to the multiple tensioning seat assemblies.

Clause 5: The vehicle of any one of the preceding Clauses, wherein the controller is configured to cause the anchorage point of at least one selected tensioning seat assemblies of the multiple tensioning seat assemblies to translate forwards and downwards relative to the seat bottom upon detection of an impact event or impending impact event.

Clause 6: The vehicle of any one of the preceding Clauses further comprising a pre-tensioner operably coupled between the buckle assembly and the seat bottom, the pre-tensioner configured to translate the anchorage point forward and downwards relative to the seat bottom upon detection of the impact even or impending impact event.

Clause 7: The vehicle of any one of the preceding Clauses further comprising an anchorage assembly coupled to the seat bottom opposite the buckle assembly at an additional anchorage point.

Clause 8: The vehicle of any one of the preceding Clauses, wherein the additional anchorage point is also adapted to be translated forwards and downwards relative to the seat bottom upon detection of the impact event or impending impact event, thereby further pre-tensioning the lap belt coupled to the anchorage assembly.

Clause 9: A vehicle seat assembly comprising a seat bottom; a seat back pivotably coupled to the seat bottom; and a buckle assembly coupled to the seat bottom at an anchorage point; wherein the anchorage point is adapted to be translated forwards and downwards relative to the seat bottom upon detection of an impact event or impending impact event, thereby pre-tensioning a lap belt coupled to the buckle assembly.

Clause 10: The vehicle seat assembly of any one of the preceding Clauses further comprising a pre-tensioner operably coupled between the buckle assembly and the seat bottom.

Clause 11: The vehicle seat assembly of any one of the preceding Clauses, wherein the pre-tensioner configured to translate the anchorage point forward and downwards relative to the seat bottom upon detection of the impact even or impending impact event.

Clause 12: The vehicle seat assembly of any one of the preceding Clauses, wherein the pre-tensioner comprises at least one of an explosive pre-tensioner, a mechanical pre-tensioner, or an electronic pre-tensioner.

Clause 13: The vehicle seat assembly of any one of the preceding Clauses, wherein the pre-tensioner is configured to provide a variable biasing force to translate the anchorage point such that the degree of pre-tensioning is determined by amount of biasing force provided by the pre-tensioner.

Clause 14: The vehicle seat assembly of any one of the preceding Clauses, wherein the anchorage point of the seat bottom comprises at least one a track structure, a slot defined in the seat bottom, or a lever.

Clause 15: The vehicle seat assembly of any one of the preceding Clauses further comprising an anchorage assembly coupled to the seat bottom opposite the buckle assembly at an additional anchorage point.

Clause 16: The vehicle seat assembly of any one of the preceding Clauses, wherein the additional anchorage point is also adapted to be translated forwards and downwards relative to the seat bottom upon detection of the impact event or impending impact event, thereby further pre-tensioning the lap belt coupled to the anchorage assembly.

Clause 17: The vehicle seat assembly of any one of the preceding Clauses further comprising an additional pre-tensioner operably coupled between the anchorage assembly and the seat bottom.

Clause 18: The vehicle seat assembly of any one of the preceding Clauses, wherein the additional pre-tensioner is configured to translate the additional anchorage point forward and downwards relative to the seat bottom upon detection of the impact even or impending impact event.

Clause 19: A non-transitory computer-readable medium comprising instructions stored in at least one memory that, when executed by one or more processors, cause the one or more processors to carry out steps comprising: determining an impact event or impending impact event of a vehicle comprising the at least one memory and the one or more processors; communicating, in response to the determination of the impact event or impending impact event of the vehicle, a signal to a pre-tensioner of a vehicle seat assembly of the vehicle, the vehicle seat assembly further comprising a seat bottom, a seat back pivotably coupled to the seat bottom, and a buckle assembly coupled to the seat bottom at an anchorage point; and translating, in response to the communication, the anchorage point forwards and downwards relative to the seat bottom utilizing the pre-tensioner such that a lap belt coupled to the buckle assembly is pre-tensioned.

Clause 20: The non-transitory computer-readable medium of any one of the preceding Clauses, wherein the steps further comprise determining a reclination angle of an occupant of the vehicle seated in the vehicle seat assembly.

Clause 21: The non-transitory computer-readable medium of any one of the preceding Clauses, wherein the signal is only communicated to the pre-tensioner when the determined reclination angle is over a threshold angle.

Clause 22: The non-transitory computer-readable medium of any one of the preceding Clauses, wherein the pre-tensioner is configured to translate the anchorage point forwards and downwards a first amount in response a first signal and a second amount, different than the first amount, in response to a second signal, different from the first signal.

Clause 23: The non-transitory computer-readable medium of any one of the preceding Clauses, wherein the signal comprises the first signal when the reclination angle of the occupant is over the threshold angle and below an additional threshold angle.

Clause 24: The non-transitory computer-readable medium of any one of the preceding Clauses, wherein the signal comprises the second signal when the reclination angle of the occupant is over the threshold angle and the additional threshold angle.

Clause 25: The non-transitory computer-readable medium of any one of the preceding Clauses, wherein the steps further comprise determining a severity of the impact event or impending impact event.

Clause 26: The non-transitory computer-readable medium of any one of the preceding Clauses, wherein the signal is only communicated to the pre-tensioner when the determined severity is over a threshold severity.

Clause 27: The non-transitory computer-readable medium of any one of the preceding Clauses, wherein the pre-tensioner is configured to translate the anchorage point forwards and downwards a first amount in response a first signal and a second amount, different than the first amount, in response to a second signal, different from the first signal.

Clause 28: The non-transitory computer-readable medium of any one of the preceding Clauses, wherein the signal comprises the first signal when the severity of the impact event or impending impact event is over the threshold severity and below an additional threshold severity.

Clause 29: The non-transitory computer-readable medium of any one of the preceding Clauses, wherein the signal comprises the second signal when the severity of the impact event or impending impact event is over the threshold severity and the additional threshold severity.

Clause 30: The non-transitory computer-readable medium of any one of the preceding Clauses, wherein the steps further comprise communicating an incident signal to a remote computing device, the incident signal indicative of utilization of the pre-tensioner.

Clause 31: The non-transitory computer-readable medium of any one of the preceding Clauses, wherein the incident signal is communicated in response to communicating the signal to the pre-tensioner of the vehicle.

Clause 32: The non-transitory computer-readable medium of any one of the preceding Clauses, wherein the steps further comprise receiving a report signal communicated from a remote computing device indicating at least one of a leading vehicle impact event or utilization of a leading vehicle pre-tensioner of a leading vehicle at a route position shared with the vehicle.

Clause 33: The non-transitory computer-readable medium of any one of the preceding Clauses, wherein the impact event or impending impact event is determined, at least in part, based on the report signal.

Clause 34: The non-transitory computer-readable medium of any one of the preceding Clauses, wherein the steps further comprise communicating, in response to the determination of the impact event or impending impact event of the vehicle, an additional signal to an additional pre-tensioner of the vehicle seat assembly of the vehicle.

Clause 35: The non-transitory computer-readable medium of any one of the preceding Clauses, wherein the vehicle seat assembly further comprising an anchorage assembly coupled to the seat bottom opposite the buckle assembly at an additional anchorage point.

Clause 36: The non-transitory computer-readable medium of any one of the preceding Clauses, wherein the steps further comprise translating, in response to the additional signal, the additional anchorage point forwards and downwards relative to the seat bottom utilizing the additional pre-tensioner such that the lap belt coupled to the anchorage assembly is further pre-tensioned.

Clause 37: The non-transitory computer-readable medium of any one of the preceding Clauses, wherein the steps further comprise, given a seat assembly including a seat bottom, a seat back pivotably coupled to the seat bottom, and a buckle assembly coupled to the seat bottom at an anchorage point, translating the anchorage point forwards and downwards relative to the seat bottom upon detection of an impact event or impending impact event, thereby pre-tensioning a lap belt coupled to the buckle assembly.

Clause 38: The non-transitory computer-readable medium of any one of the preceding Clauses, wherein the steps further comprise given an anchorage assembly coupled to the seat bottom opposite the buckle assembly at an additional anchorage point, translating the additional anchorage point forwards and downwards relative to the seat bottom upon detection of the impact event or impending impact event, thereby further pre-tensioning the lap belt coupled to the anchorage assembly.

Clause 39: A non-transitory computer-readable medium comprising instructions stored in at least one memory that, when executed by one or more processors, cause the one or more processors to carry out steps comprising: given an anchorage assembly coupled to the seat bottom opposite the buckle assembly at an additional anchorage point, translating the additional anchorage point forwards and downwards relative to the seat bottom upon detection of the impact event or impending impact event, thereby further pre-tensioning the lap belt coupled to the anchorage assembly.

Clause 40: A method for pre-tensioning a lap belt of a vehicle seat assembly. The method having a number of steps including determining an impact event or impending impact event of a vehicle comprising the at least one memory and the one or more processors; communicating, in response to the determination of the impact event or impending impact event of the vehicle, a signal to a pre-tensioner of a vehicle seat assembly of the vehicle, the vehicle seat assembly further comprising a seat bottom, a seat back pivotably coupled to the seat bottom, and a buckle assembly coupled to the seat bottom at an anchorage point; and translating, in response to the communication, the anchorage point forwards and downwards relative to the seat bottom utilizing the pre-tensioner such that a lap belt coupled to the buckle assembly is pre-tensioned.

Clause 41: The method of any one of the preceding Clauses, wherein the steps further comprise determining a reclination angle of an occupant of the vehicle seated in the vehicle seat assembly.

Clause 42: The method of any one of the preceding Clauses, wherein the signal is only communicated to the pre-tensioner when the determined reclination angle is over a threshold angle.

Clause 43: The method of any one of the preceding Clauses, wherein the pre-tensioner is configured to translate the anchorage point forwards and downwards a first amount in response a first signal and a second amount, different than the first amount, in response to a second signal, different from the first signal.

Clause 44: The method of any one of the preceding Clauses, wherein the signal comprises the first signal when the reclination angle of the occupant is over the threshold angle and below an additional threshold angle.

Clause 45: The method of any one of the preceding Clauses, wherein the signal comprises the second signal when the reclination angle of the occupant is over the threshold angle and the additional threshold angle.

Clause 46: The method of any one of the preceding Clauses, wherein the steps further comprise determining a severity of the impact event or impending impact event.

Clause 47: The method of any one of the preceding Clauses, wherein the signal is only communicated to the pre-tensioner when the determined severity is over a threshold severity.

Clause 48: The method of any one of the preceding Clauses, wherein the pre-tensioner is configured to translate the anchorage point forwards and downwards a first amount in response a first signal and a second amount, different than the first amount, in response to a second signal, different from the first signal.

Clause 49: The method of any one of the preceding Clauses, wherein the signal comprises the first signal when the severity of the impact event or impending impact event is over the threshold severity and below an additional threshold severity.

Clause 50: The method of any one of the preceding Clauses, wherein the signal comprises the second signal when the severity of the impact event or impending impact event is over the threshold severity and the additional threshold severity.

Clause 51: The method of any one of the preceding Clauses, wherein the steps further comprise communicating an incident signal to a remote computing device, the incident signal indicative of utilization of the pre-tensioner.

Clause 52: The method of any one of the preceding Clauses, wherein the incident signal is communicated in response to communicating the signal to the pre-tensioner of the vehicle.

Clause 53: The method of any one of the preceding Clauses, wherein the steps further comprise receiving a report signal communicated from a remote computing device indicating at least one of a leading vehicle impact event or utilization of a leading vehicle pre-tensioner of a leading vehicle at a route position shared with the vehicle.

Clause 54: The method of any one of the preceding Clauses, wherein the impact event or impending impact event is determined, at least in part, based on the report signal.

Clause 55: The method of any one of the preceding Clauses, wherein the steps further comprise communicating, in response to the determination of the impact event or impending impact event of the vehicle, an additional signal to an additional pre-tensioner of the vehicle seat assembly of the vehicle.

Clause 56: The method of any one of the preceding Clauses, wherein the vehicle seat assembly further comprises an anchorage assembly coupled to the seat bottom opposite the buckle assembly at an additional anchorage point.

Clause 57: The method of any one of the preceding Clauses, wherein the steps further comprise translating, in response to the additional signal, the additional anchorage point forwards and downwards relative to the seat bottom utilizing the additional pre-tensioner such that the lap belt coupled to the anchorage assembly is further pre-tensioned.

Clause 58: The method of any one of the preceding Clauses, wherein the steps further comprise, given a seat assembly including a seat bottom, a seat back pivotably coupled to the seat bottom, and a buckle assembly coupled to the seat bottom at an anchorage point, translating the anchorage point forwards and downwards relative to the seat bottom upon detection of an impact event or impending impact event, thereby pre-tensioning a lap belt coupled to the buckle assembly.

Clause 59: A method for pre-tensioning a lap belt of a vehicle seat assembly. The method having a number of steps including, given a seat assembly including a seat bottom, a seat back pivotably coupled to the seat bottom, and a buckle assembly coupled to the seat bottom at an anchorage point, translating the anchorage point forwards and downwards relative to the seat bottom upon detection of an impact event or impending impact event, thereby pre-tensioning a lap belt coupled to the buckle assembly.

Clause 60: The method of any one of the preceding Clauses, wherein the steps further comprise given an anchorage assembly coupled to the seat bottom opposite the buckle assembly at an additional anchorage point, translating the additional anchorage point forwards and downwards relative to the seat bottom upon detection of the impact event or impending impact event, thereby further pre-tensioning the lap belt coupled to the anchorage assembly.

## Claims

1. A vehicle seat assembly comprising:
a seat bottom;
a seat back pivotably coupled to the seat bottom; and
a buckle assembly coupled to the seat bottom at an anchorage point;
wherein the anchorage point is adapted to be translated forwards and downwards relative to the seat bottom upon detection of an impact event or impending impact event, thereby pre-tensioning a lap belt coupled to the buckle assembly.

2. The vehicle seat assembly of claim 1, further comprising:
a pre-tensioner operably coupled between the buckle assembly and the seat bottom, the pre-tensioner configured to translate the anchorage point forward and downwards relative to the seat bottom upon detection of the impact even or impending impact event.

3. The vehicle seat assembly of claim 2, wherein the pre-tensioner comprises at least one of an explosive pre-tensioner, a mechanical pre-tensioner, or an electronic pre-tensioner, and/or, wherein the pre-tensioner is configured to provide a variable biasing force to translate the anchorage point such that the degree of pre-tensioning is determined by amount of biasing force provided by the pre-tensioner.

4. The vehicle seat assembly of any of the preceding claims, wherein the anchorage point of the seat bottom comprises at least one a track structure, a slot defined in the seat bottom, or a lever.

5. The vehicle seat assembly of any of the preceding claims, further comprising:
an anchorage assembly coupled to the seat bottom opposite the buckle assembly at an additional anchorage point;
wherein the additional anchorage point is also adapted to be translated forwards and downwards relative to the seat bottom upon detection of the impact event or impending impact event, thereby further pre-tensioning the lap belt coupled to the anchorage assembly.

6. The vehicle seat assembly of claim 5, further comprising:
an additional pre-tensioner operably coupled between the anchorage assembly and the seat bottom, the additional pre-tensioner configured to translate the additional anchorage point forward and downwards relative to the seat bottom upon detection of the impact even or impending impact event.

7. A vehicle comprising:
a plurality of seat assemblies, at least one seat assembly of the plurality of seat assemblies configured as a tensioning seat assembly according to any of the preceding claims, preferably wherein each seat assembly of the plurality of seat assemblies is configured as a tensioning seat assembly according to any of the preceding claims.

8. The vehicle of claim 7, wherein multiple of the plurality of seat assemblies are each configured as the tensioning seat assembly according to any of claims 1-6, and wherein the vehicle further comprises:
a controller communicatively coupled to the multiple tensioning seat assemblies, the controller configured to cause the anchorage point of at least one selected tensioning seat assemblies of the multiple tensioning seat assemblies to translate forwards and downwards relative to the seat bottom upon detection of an impact event or impending impact event.

9. The vehicle of any of claims 7-8, the tensioning seat assembly further comprising:
a pre-tensioner operably coupled between the buckle assembly and the seat bottom, the pre-tensioner configured to translate the anchorage point forward and downwards relative to the seat bottom upon detection of the impact even or impending impact event; and/or
an anchorage assembly coupled to the seat bottom opposite the buckle assembly at an additional anchorage point;
wherein the additional anchorage point is also adapted to be translated forwards and downwards relative to the seat bottom upon detection of the impact event or impending impact event, thereby further pre-tensioning the lap belt coupled to the anchorage assembly.

10. A non-transitory computer-readable medium comprising instructions stored in at least one memory that, when executed by one or more processors, cause the one or more processors to carry out steps comprising:
determining an impact event or impending impact event of a vehicle comprising the at least one memory and the one or more processors;
communicating, in response to the determination of the impact event or impending impact event of the vehicle, a signal to a pre-tensioner of a vehicle seat assembly of the vehicle, the vehicle seat assembly further comprising a seat bottom, a seat back pivotably coupled to the seat bottom, and a buckle assembly coupled to the seat bottom at an anchorage point; and
translating, in response to the communication, the anchorage point forwards and downwards relative to the seat bottom utilizing the pre-tensioner such that a lap belt coupled to the buckle assembly is pre-tensioned.

11. The non-transitory computer-readable medium of claim 10, wherein the steps further comprise:
determining a reclination angle of an occupant of the vehicle seated in the vehicle seat assembly,
wherein the signal is only communicated to the pre-tensioner when the determined reclination angle is over a threshold angle.

12. The non-transitory computer-readable medium of claim 11, wherein the pre-tensioner is configured to translate the anchorage point forwards and downwards a first amount in response a first signal and a second amount, different than the first amount, in response to a second signal, different from the first signal,
wherein the signal comprises the first signal when the reclination angle of the occupant is over the threshold angle and below an additional threshold angle, and
wherein the signal comprises the second signal when the reclination angle of the occupant is over the threshold angle and the additional threshold angle.

13. The non-transitory computer-readable medium of any of claims 10-12, wherein the steps further comprise:
determining a severity of the impact event or impending impact event,
wherein the signal is only communicated to the pre-tensioner when the determined severity is over a threshold severity.

14. The non-transitory computer-readable medium of claim 13, wherein the pre-tensioner is configured to translate the anchorage point forwards and downwards a first amount in response a first signal and a second amount, different than the first amount, in response to a second signal, different from the first signal,
wherein the signal comprises the first signal when the severity of the impact event or impending impact event is over the threshold severity and below an additional threshold severity, and
wherein the signal comprises the second signal when the severity of the impact event or impending impact event is over the threshold severity and the additional threshold severity.

15. The non-transitory computer-readable medium of any of claims 10-14, wherein the steps further comprise one or more of:
communicating an incident signal to a remote computing device, the incident signal indicative of utilization of the pre-tensioner;
receiving a report signal communicated from a remote computing device indicating at least one of a leading vehicle impact event or utilization of a leading vehicle pre-tensioner of the leading vehicle at a route position shared with the vehicle, wherein the impact event or impending impact event is determined, at least in part, based on the report signal; and
communicating, in response to the determination of the impact event or impending impact event of the vehicle, an additional signal to an additional pre-tensioner of the vehicle seat assembly of the vehicle, the vehicle seat assembly further comprising an anchorage assembly coupled to the seat bottom opposite the buckle assembly at an additional anchorage point; and translating, in response to the additional signal, the additional anchorage point forwards and downwards relative to the seat bottom utilizing the additional pre-tensioner such that the lap belt coupled to the anchorage assembly is further pre-tensioned.
